# EUROPÄISCHE PATENTSCHRIFT

(11) **EP 4 181 162 B1**
(45) Veröffentlichungstag und Bekanntmachung des Hinweises auf die Patenterteilung: **04.03.2026**
(21) Anmeldenummer: 21208103.8
(22) Anmeldetag: 13.11.2021
(51) Int. Cl.: H01G 11/08, H01G 11/10, H01M 16/00, H01M 4/66, H01G 11/76, H01M 6/40, H01M 6/12, H01M 50/105, H01M 50/531, H01G 11/72, H01G 11/84

(54) **ELEKTROCHEMISCHE ENERGIESPEICHERZELLE UND BATTERIE**
ELECTROCHEMICAL ENERGY STORAGE CELL AND BATTERY
ÉLÉMENT ÉLECTROCHIMIQUE D'ACCUMULATEUR D'ÉNERGIE ET BATTERIE

(43) Veröffentlichungstag der Anmeldung: 17.05.2023
(73) Patentinhaber: VARTA Microbattery GmbH, 73479 Ellwangen Jagst (DE)
(72) Erfinder: Krebs, Martin, 73494 Rosenberg (DE)
(74) Vertreter: Ostertag & Partner Patentanwälte mbB

(56) Entgegenhaltungen:
- EP-A1- 1 391 961
- WO-A1-2008/113133
- WO-A1-2019/204964
- JP-A- H0 554 895
- KR-A- 20090 110 469
- KR-A- 20170 098 004
- US-A1- 2003 035 982
- US-A1- 2021 065 992

## Beschreibung

Die vorliegende Erfindung betrifft eine elektrochemische Energiespeicherzelle mit einem schichtförmigen Aufbau und einer gestapelten Anordnung der Elektrodenschichten sowie eine Batterie, die aus solchen elektrochemischen Energiespeicherzellen aufgebaut ist. Weiterhin betrifft die Erfindung eine Verwendung dieser Batterie und ein Verfahren zur Herstellung der Energiespeicherzelle oder der Batterie.

### ANWENDUNGSGEBIET UND STAND DER TECHNIK

Elektrochemische Energiespeicherzellen und Batterien sind in den verschiedensten Ausführungen bekannt. So gibt es leistungsstarke Lithium-Ionen-Zellen, die beispielsweise in Elektrofahrzeugen oder leistungshungrigen elektronischen Mobilgeräten eingesetzt werden können. Besonders leitungsstarke Lithium-Ionen-Zellen sind aus der WO 2019/204964 A1 und der US 2021/0065992 A1 bekannt. Diese speichern Strom nicht nur elektrochemisch sondern auch rein statisch. Sie enthalten hierzu Materialien, die aus Doppelschichtkondensatoren bekannt sind.

Weiterhin gibt es gedruckte Zellen oder Batterien, bei denen Funktionsteile, insbesondere Elektroden und Stromableiterschichten, auf ein geeignetes Substrat aufgedruckt werden. Hierfür können verschiedene Pasten verwendet werden, die beispielsweise mit einem Siebdruckverfahren auf ein elektrisch nicht leitendes Substrat in der gewünschten Form aufgedruckt werden.

Im Sinne der vorliegenden Erfindung ist mit dem Begriff "elektrochemische Energiespeicherzelle" oder "elektrochemische Zelle" eine einzelne, zur Speicherung elektrischer Energie befähigte Zelle zu verstehen, die mindestens eine positive und mindestens eine negative Elektrode aufweist. In elektrochemischen Zellen findet eine elektrochemische, energieliefernde Reaktion statt, welche sich aus zwei elektrisch miteinander gekoppelten, aber räumlich voneinander getrennten Teilreaktionen zusammensetzt. Eine bei vergleichsweise niedrigem Redoxpotential stattfindende Teilreaktion läuft an der negativen Elektrode ab. Eine bei vergleichsweise höherem Redoxpotential ablaufende Reaktion läuft an der positiven Elektrode ab. Bei der Entladung werden an der negativen Elektrode durch einen Oxidationsprozess Elektronen freigesetzt, resultierend in einem Elektronenstrom über einen äußeren Verbraucher zur positiven Elektrode, von der eine entsprechende Menge an Elektronen aufgenommen wird. An der positiven Elektrode findet also ein Reduktionsprozess statt.

Zeitgleich kommt es zum Zwecke des Ladungsausgleichs zu einem der Elektrodenreaktion entsprechenden Ionenstrom innerhalb der elektrochemischen Zelle. Dieser Ionenstrom wird durch einen ionenleitenden Elektrolyten gewährleistet.

Wenn mehrere elektrochemische Zellen zusammengeschaltet werden, wird im Rahmen der vorliegenden Erfindung der Begriff "Batterie" verwendet.

Die WO 2006/105966 A1 beschreibt ein galvanisches Element bzw. eine elektrochemische Zelle, bei der mindestens eine positive und mindestens eine negative Elektrode nebeneinander auf einem flächigen, elektrisch nicht leitenden Substrat angeordnet und über einen ionenleitfähigen Elektrolyten miteinander verbunden sind. Bei dem flächigen Substrat kann es sich insbesondere um eine Folie, beispielsweise um eine Kunststofffolie, handeln. Zwischen dem flächigen Substrat und den eigentlichen Elektroden bzw. dem elektrochemisch aktiven Elektrodenmaterial befinden sich Leiterbahnen, die als Ableiter oder Kollektoren für den Stromfluss dienen. Hierfür können beispielsweise elektrisch leitende Folien, insbesondere Metallfolien, verwendet werden. Die Leiterbahnen können alternativ mittels einer druckfähigen Paste auf das Substrat aufgebracht werden.

Neben solchen koplanaren Anordnungen von Elektroden sind auch dünne, flexible elektrochemische Zellen oder Batterien bekannt, die einen mehrschichtigen Aufbau aufweisen, bei denen flächige Elektroden in Form von Elektrodenschichten als Stapel übereinander angeordnet sind. Die WO 2011/151263 A1 beschreibt eine solche Batterie mit gestapelter Anordnung der Elektroden. Die übereinander angeordneten, entgegengesetzt gepolten Elektrodenschichten sind dabei durch eine dazwischenliegende Separatorschicht voneinander getrennt und bilden mit dieser einen Elektroden-Separator-Stapel. Als Stromableiter können Stromkollektoren, die mit Anschlusskontakten verbunden sind, auf einen Batterieträger bzw. ein Substrat aufgebracht sein. Die Elektrodenschichten befinden sich in unmittelbarem Kontakt mit den Stromkollektoren und sind über Anschlusskontakte mit einem Verbraucher verbunden.

Solche gedruckten Batterien oder elektrochemischen Zellen können grundsätzlich wiederaufladbar oder nicht wiederaufladbar ausgebildet sein.

Besondersverbreitet bei gedruckten Batterien sind Zink-Braunstein-Batterien. Hierbei kann als Anodenmaterial für die negative Elektrode zum Beispiel eine druckfähige Zinkpaste dienen, die Zinkpulver, einen geeigneten Binder und ein geeignetes Lösungsmittel umfasst. Zur Herstellung der Kathode bzw. der positiven Elektrode kann insbesondere eine druckfähige Paste eingesetzt werden, die Braunstein (MnO₂) sowie Ruß und/oder Graphit als Leitmaterial und einen geeigneten Binder und ein geeignetes Lösungsmittel umfasst. Als Stromableiter für die negative Elektrode kommen insbesondere Silber, Kupfer und/oder Graphit infrage. Die Stromableiter der positiven Elektrode werden bevorzugt auf Basis von Silber, Nickel und/oder Graphit gebildet. Besonders weit verbreitet sind für beide Stromableiterschichten Silberleitpasten.

Ein Ausführungsbeispiel einer dünnen Zink-Braunstein-Batterie mit einem schichtförmigen Aufbau ist aus der JP H0554895 A bekannt.

Aus der EP 1391961 A1 ist eine integrierte Zink-Braunstein-Batterie bekannt, bei der übliche Batterieelemente mit Superkondensatorelementen kombiniert sind und die Ladung und Entladung über ein elektronisches Kontrollelement kontrolliert wird.

Derartige gedruckte elektrochemische Zellen oder Batterien sind aufgrund ihrer dünnen und flexiblen Struktur für vielfältige Anwendungen geeignet, besonders auch für eine Energieversorgung von relativ kurzlebigen Artikeln, zum Beispiel für Einwegartikel.

Ein besonders vielseitig einsetzbares Beispiel für die Verwendung von gedruckten elektrochemischen Energiespeicherzellen und Batterien sind Funketiketten. Funketiketten können zur Verfolgung von Produkten aller Art dienen, beispielsweise von Pharmazeutika und von Pflanzenschutzmitteln. Solche Funketiketten sind beispielsweise in der WO 2019/145224 A1 beschrieben. Sie umfassen in der Regel eine Energieversorgungseinheit, mindestens einen Sensor, eine Steuereinheit, einen Datenspeicher, in dem eine eindeutige Produktkennung gespeichert ist, und eine Sende- und/oder Empfangseinheit. Mit Hilfe des Sensors kann eine Zustandsinformation betreffend das Produkt ermittelt werden, beispielsweise betreffend den Öffnungszustand seiner Verpackung. Die Steuereinheit kann dann die Sende- und/oder Empfangseinheit dazu veranlassen, die Zustandsinformation und die Produktkennung an einen Datenempfänger zu senden.

Für die Versendung von beispielsweise Zustandsinformationen und/oder einer Produktkennung können Funketiketten insbesondere Mobilfunknetze nutzen. Mobilfunknetze decken heute weite Teile der bewohnten Welt ab. Sie sind daher für die weltweite Verfolgung von Produkten besonders gut geeignet. Mobilfunkchips stellen hinsichtlich ihres Energieverbrauchs allerdings hohe Anforderungen. Dies gilt auch für Mobilfunkchips neuerer Generation, die nach dem LTE-Standard (LTE = Long Term Evolution) funken. In Abhängigkeit des gewählten Funkprotokolls müssen zumindest für kurze Zeitfenster Peakströme von bis zu 400 mA zur Verfügung stehen.

Herkömmliche gedruckte Batterien, wie sie beispielsweise in der US 2010/081049 A1 beschrieben sind, genügen oftmals den oben skizzierten Anforderungen nicht und können die geforderten hohen Peakströme nicht liefern, da sie eine zu hohe Impedanz ausweisen.

### AUFGABE UND LÖSUNG

Demgegenüber stellt sich die Erfindung die Aufgabe, eine verbesserte elektrochemische Energiespeicherzelle oder eine verbesserte Batterie bereitzustellen, die vor allem für solche Anwendungen geeignet ist, bei denen kurzzeitig hohe Peakströme bereitgestellt werden müssen. Gleichzeitig soll die Energiespeicherzelle oder die Batterie dünn und flexibel sein, so dass sie für vielfältige Einsatzmöglichkeiten einsetzbar ist. Darüber hinaus soll die Energiespeicherzelle oder die Batterie kostengünstig herstellbar sein, so dass sie beispielsweise für Einwegartikel besonders geeignet ist.

Diese Aufgabe wird durch eine elektrochemische Energiespeicherzelle mit einem schichtförmigen Aufbau gelöst, wie sie sich aus dem Anspruch 1 ergibt. Weiterhin wird die Aufgabe durch eine Batterie gemäß dem Anspruch 9 gelöst. Bevorzugte Ausgestaltungen der Energiespeicherzelle und der Batterie ergeben sich aus den von diesen Ansprüchen abhängigen Ansprüchen. Weiterhin wird die Aufgabe durch die Verwendung einer Batterie gemäß dem weiteren unabhängigen Anspruch 10 gelöst.

Die erfindungsgemäße Zink-Braunstein-Zelle oder Zink-Silberoxid-Zelle ist durch die Merkmale des Anspruchs 1 definiert.

Bei der erfindungsgemäßen elektrochemischen Energiespeicherzelle handelt es sich also um eine Zelle mit einer gestapelten Anordnung der Elektroden, wobei neben dem eigentlichen Elektrodenbereich der Zelle, die den faradayschen Bereich der Zelle darstellt, in dem Energie primär chemisch gespeichert ist, ein zusätzlicher Superkondensatorbereich in der Zelle vorgesehen ist, in dem elektrische Energie primär statisch gespeichert wird. Durch diesen Superkondensatorbereich wird eine Hochstrombelastbarkeit der Zellen erreicht, so dass Stromspitzen, wie sie beispielsweise für LTE benötigt werden, ohne weiteres bereitgestellt werden können. Dabei können diese bereitgestellten Stromspitzen etwa zwanzigmal so hoch sein wie der durch den faradayschen Zellenanteil bereitgestellte Strom. In den Pausen zwischen angeforderten den Stromspitzen laden sich die Superkondensatorbereiche durch die faradayschen Zellenanteile wieder auf, so dass bei einer nächsten Anforderung einer Stromspitze diese Stromspitze wieder abgerufen werden kann.

Herkömmliche Energiespeicherzellen, die ausschließlich von den Elektrodenbereichen mit positiver Elektrode und negativer Elektrode gebildet werden, besitzen nur eine faradaysche Kapazität. Derartige Energiespeicherzellen können zwar große Ladungsmengen speichern. Allerdings ist der Zugriff auf diese Ladungen gehemmt, so dass eine schnelle Entladung nicht möglich ist. Damit ist die Pulsbelastbarkeit solcher Energiespeicherzellen bzw. daraus aufgebauter Batterien sehr begrenzt.

Die Erfindung löst dieses Problem, indem zusätzlich mindestens ein Superkondensatorbereich in der Energiespeicherzelle vorgesehen ist. Dieser Superkondensatorbereich liegt zweckmäßigerweise in koplanarer Anordnung im Verhältnis zu dem oder den Elektrodenbereichen der Zelle. Wie bei den Elektroden der Zelle liegen auch die Superkondensatorschichten in einem Stapel übereinander und sind dabei durch einen Separator voneinander getrennt und mit einem Elektrolyten benetzt.

Bei Auftreten einer Pulsstrombelastung fließt der Strom über den Superkondensatorbereich, da dieser einen wesentlich niedrigeren Innenwiderstand hat. In der folgenden Belastungspause wird der Superkondensatorbereich wieder aus den faradayschen Anteilen bzw. aus den Elektrodenbereichen aufgeladen. Sofern längere Ladungsentnahmen vorgesehen sind, können diese in der Regel vollständig über die Elektrodenbereiche erfolgen.

Unter einem Pulsstrom oder Strompuls wird in diesem Zusammenhang bevorzugte ein Hochstrompuls in einer Größenordnung in einem Bereich von 100 bis 400 mA, insbesondere 200 bis 300 mA, für eine Zeitdauer von 50 bis 250 ms, insbesondere 100 bis 200 ms, verstanden.

An dieser Stelle sei angemerkt, dass der erste und der zweite Elektrolyt sich zwar grundsätzlich voneinander unterscheiden und/oder getrennt voneinander vorliegen können, bevorzugt ist der erste Elektrolyt jedoch identisch mit dem zweiten Elektrolyten. Bevorzugt weisen der Elektrodenbereich und der Superkondensatorbereich somit den gleichen Elektrolyten auf.

Die erste Elektrodenschicht in dem Elektrodenbereich und die erste Superkondensatorschicht liegen bevorzugt nebeneinander auf der gleichen, nämlich der ersten elektrischen Leiterschicht. Die erste Elektrodenschicht und die erste Superkondensatorschicht weisen entsprechend auch die gleiche Polarität auf, sind also entweder beide entweder Träger von positiver oder von negativer Ladung. Analoges gilt für die zweite Elektrodenschicht in dem Elektrodenbereich und die zweite Superkondensatorschicht, die bevorzugt ebenfalls nebeneinander auf der gleichen, nämlich der zweiten elektrischen Leiterschicht, angeordnet sind.

Bei der ersten und der zweiten Separatorschicht handelt es sich bevorzugt um zwei getrennt voneinander vorliegende Separatoren. Diese können aus dem gleichen Material bestehen und auch die gleiche Dicke aufweisen. Es können aber durchaus auch unterschiedliche Separatormaterialien eingesetzt werden. Grundsätzlich wäre es auch möglich, dass es sich bei der ersten und der zweiten Separatorschicht um Teile oder Teilbereiche ein- und desselben Separators handelt. Dies ist allerdings nur in wenigen Fällen bevorzugt.

Superkondensatormaterialien an sich sind bekannt. Bei Superkondensatoren handelt es sich im Prinzip um elektrochemische Kondensatoren, die im Vergleich zu herkömmlichen faradayschen Energiespeicherzellen oder Batterien mit vergleichbarem Gewicht beispielsweise nur etwa 10 % von deren Energiedichte aufweisen. Die Leistungsdichte von Superkondensatoren kann allerdings zehnbis hundertmal so groß sein, so dass Superkondensatoren sehr viel schneller geladen und entladen werden können. Bisherige Einsatzgebiete von Superkondensatoren reichen von der Bereitstellung kleinster Ströme zum Datenerhalt in elektronischen Geräten bis in den Bereich der Leistungselektronik.

Die Erfindung nutzt diese Eigenschaft von Superkondensatormaterialien und stellt damit eine Energiespeicherzelle bereit, die insbesondere den Anforderungen an die kurzzeitige Bereitstellung von hohen Strompulsen gerecht wird.

Die Anteile der Superkondensatorbereiche und der faradayschen Zellenanteile, also der Elektrodenbereiche, können derart eingestellt werden, dass der für die jeweilige Anwendung geforderte Strompuls erreichbar ist. Dabei kann die Zelle so ausgelegt werden, dass der komplette Strombedarf bei den angeforderten Pulsen über die Superkondensatorbereiche bereitgestellt wird. Die übrigen Anteile der Zelle stellen gewissermaßen eine Nachladestation für die Superkondensatorbereiche dar. In diesem Zusammenhang können die Superkondensatorbereiche auch als Pufferkondensatoren bezeichnet werden, die einen Puffer zwischen dem Verbraucher und den faradayschen Anteilen der Zelle bereitstellen.

Bevorzugt bestehen die erste Superkondensatorschicht und die zweite Superkondensatorschicht aus dem gleichen Superkondensatormaterial.

Vorzugsweise zeichnen sich die Superkondensatorbereiche durch eine hohe Doppelschichtkapazität aus.

In besonders bevorzugten Ausgestaltungen zeichnen sich das Superkondensatormaterial bzw. die Superkondensatorschichten durch mindestens eines der unmittelbar folgenden zusätzlichen Merkmale aus:
a. Das Superkondensatormaterial umfasst Aktivkohle mit einer großen spezifischen Oberfläche, insbesondere mit einer spezifischen Oberfläche von 1000 bis 3000 m² pro Gramm Aktivkohle.
b. das Superkondensatormaterial umfasst vorzugsweise ein Leitmaterial, insbesondere Graphit und/oder Ruß.
c. das Superkondensatormaterial umfasst ein Bindermaterial.
d. die Superkondensatorschichten sind mittels einer Druckpaste auf die Leiterschichten aufgebracht, wobei die Druckpaste ein Lösungsmittel umfasst.

Vorzugsweise sind die vorgenannten Merkmale a. bis c. und besonders bevorzugt a. bis d. in Kombination verwirklicht.

Wesentlicher Bestandteil des Superkondensatormaterials ist vorzugsweise Aktivkohle. Alternativ oder zusätzlich zu Aktivkohle kann das Superkondensatormaterial auch andere Erscheinungsformen von Kohlenstoff enthalten, beispielsweise Aktivkohlefaser, Carbid-abgeleiteter Kohlenstoff, Kohlenstoff-Aerogel, Graphit, Graphen oder Kohlenstoffnanoröhrchen. Herkömmliche Aktivkohle hat demgegenüber jedoch den Vorteil, dass sie besonders preiswert und dazu ungiftig, chemisch inert und korrosionsbeständig ist.

Graphit und/oder Ruß oder ähnlich wirkende Substanzen können als Leitmaterial in dem Superkondensatormaterial eingesetzt werden.

Der Einsatz eines Bindermaterials oder eines Bindersystems ist besonders vorteilhaft, da das Superkondensatormaterial in Schichtform auf die elektrischen Leiterschichten aufgebracht wird und mittels eines Bindersystems oder eines Bindermaterials besonders gut auf der Leiterschicht haften kann. Darüber hinaus gewährleistet es die strukturelle Integrität der Superkondensatorschichten. Als Bindersysteme kommen beispielsweise Mischungen auslangkettigen Polymeren in Frage, z.B. Polyvinylpyrrolidon (PVP), Carboxymethylzellulose (CMC) oder Polyacrylat. Um die Elastizität zu erhöhen, wird oft SBR zugesetzt. (s. auch S.14)

In besonders vorteilhafter Weise werden die Superkondensatorschichten auf die Leiterschichten aufgedruckt. Zu diesem Zweck wird zweckmäßigerweise eine Druckpaste mit dem Superkondensatormaterial verwendet, wobei die Druckpaste vorzugsweise ein Lösungsmittel umfasst, das im Zuge der Trocknung der Superkondensatorschichten verdunstet. Weiterhin enthält die Druckpaste typischerweise > 90 % Aktivkohle, < 5 % Grafit und/oder Ruß und zwischen 2 % und 8 % Binder.

Bei dem ersten und dem zweiten Substrat kann es sich um zwei voneinander getrennte Substrate handeln. In vielen Ausführungsformen ist es aber bevorzugt, dass es sich bei dem ersten und dem zweiten Substrat um unterschiedliche Teile oder Teilbereiche ein- und desselben Substrats handelt, beispielsweise um zwei Teile einer entlang einer Knicklinie gefalteten Kunststoff- oder Kunststoff-Metall-Verbundfolie.

In einer Weiterbildung der Erfindung ist Folgendes bevorzugt:
a. Der Elektrodenbereich (200) und der Superkondensatorbereich (300) der erfindungsgemäßen Zelle, einschließlich der Elektroden-, Separator- und Superkondensatorschichten, werden von einem Gehäuse umschlossen.
b. Das Gehäuse umfasst das erste und das zweite Substrat, ist bevorzugt sogar aus dem ersten Substrat und dem zweiten Substrat gebildet.

Das Gehäuse umfasst bevorzugt eine Gehäuseinnenseite, welche die Flächen umfasst, auf denen die erste elektrische Leiterschicht und die zweite elektrische Leiterschicht aufgebracht sind. Besonders bevorzugt handelt es sich bei dem ersten und dem zweiten elektrisch isolierenden Substrat um Folien oder um Teile oder Teilbereiche einer Folie.

Besonders vorteilhaft ist es, wenn die Oberfläche des ersten und des zweiten Substrats keine elektrisch leitenden Eigenschaften aufweist, so dass Kurzschlüsse oder Kriechströme ausgeschlossen werden können, wenn die Leiterstrukturen der Zelle unmittelbar auf die Substrate gedruckt werden. Beispielsweise können die Substrate aus Kunststoff bestehen. Geeignet ist beispielsweise eine Folie aus einem Polyolefin oder aus Polyethylenterephthalat.

Besonders bevorzugt ist der Superkondensatorbereich der erfindungsgemäßen Energiespeicherzelle in einem terminalen Abschnitt der Zelle angeordnet, wobei in dem terminalen Abschnitt der Zelle mindestens ein elektrischer Anschlusskontakte zum Abgreifen der elektrischen Energie durch einen Verbraucher vorgesehen ist.

In besonders bevorzugten Ausgestaltungen der erfindungsgemäßen Energiespeicherzelle zeichnet sich die Energiespeicherzelle durch mindestens eines der unmittelbar folgenden zusätzlichen Merkmale a. bis c. aus:
a. Die erste und/oder die zweite elektrische Leiterschicht umfasst einen Bereich, der zum Abgreifen elektrischer Energie der Energiespeicherzelle durch einen elektrischen Verbraucher vorgesehen ist.
b. Der Bereich zum Abgreifen elektrischer Energie der Energiespeicherzelle liegt außerhalb des Gehäuses.
c. Der Superkondensatorbereich kontaktiert die erste und/oder die zweite elektrische Leiterschicht zwischen dem zum Abgreifen elektrischer Energie vorgesehenen Bereich und dem Elektrodenbereich.

Auch hier sind die unmittelbar vorstehenden Merkmale a. bis c. bevorzugt in Kombination miteinander realisiert.

Bereiche, die zum Abgreifen elektrischer Energie der Energiespeicherzelle durch einen Verbraucher vorgesehen sind, sind natürlich frei von Elektrodenmaterial und Superkondensatormaterial. Diese Bereiche bilden die Anschlusskontakte der Zelle.

Wenn mehrere Zellen zu einer Batterie verschaltet sind, wie es unten noch beschrieben ist, so ist es in der Regel vorgesehen, dass nur eine der Zellen den positiven Anschlusskontakt und nur eine der Zellen den negativen Anschlusskontakt der Batterie bereitstellt, wobei die übrigen Zellen entsprechend miteinander verschaltet sind.

Die Anordnung des oder der Superkondensatorbereiche der erfindungsgemäßen Energiespeicherzelle zwischen dem zum Abgreifen elektrischer Energie vorgesehenen Bereich und dem Elektrodenbereich hat den besonderen Vorteil, dass ein elektrischer Verbraucher die angeforderte Energie bzw. den angeforderten Strompuls direkt im Bereich des Superkondensatorbereichs abgreifen kann. Hierdurch ist eine besonders schnelle Entladung möglich.

Es ist besonders bevorzugt, dass die erfindungsgemäße Batterie einschließlich des Gehäuses eine maximale Dicke im Bereich von wenigen Millimetern, besonders bevorzugt im Bereich von 0,5 mm bis 5 mm, weiter bevorzugt im Bereich von 1 mm bis 3 mm, aufweist. Ihre sonstigen Dimensionen hängen von der Anzahl der elektrisch verschalteten einzelnen Zellen und deren Dimensionen ab. Eine Batterie mit vier seriell verschalteten Zellen kann beispielsweise eine Länge von 5 bis 20 cm und eine Breite von 4 bis 18 cm aufweisen.

Weiterhin zeichnet sich die erfindungsgemäße Energiespeicherzelle in besonders bevorzugter Weise durch das unmittelbar folgende zusätzliche Merkmal a. aus:
a. Der Superkondensatorbereich erstreckt sich auf einem Flächenanteil von 10 bis 50 % der elektrischen Leiterschichten, insbesondere 15 bis 30 %, vorzugsweise 18 bis 21 %.

Der Flächenanteil des Superkondensatorbereichs oder der Superkondensatorbereiche in Bezug zu den faradayschen Anteilen der Zelle, also zu den Elektrodenbereichen, kann im Prinzip frei gewählt werden. Dabei lässt sich die Energiespeicherzelle oder eine entsprechende Batterie für verschiedene Anwendungen und Anforderungen anpassen. Für viele Anwendungen ist es dabei vorteilhaft, wenn der Superkondensatorbereich weniger als 50 % der Fläche der elektrischen Leiterschichten belegt, so dass auch ausreichend Flächenanteil für die Elektrodenbereiche zur Verfügung steht. Für viele Anwendungen ist beispielsweise ein Flächenanteil von ca. 20 % für den Superkondensatorbereich vorteilhaft, so dass auf der einen Seite genügend Energiespeicherkapazität auf der Basis der faradayschen Anteile der Zelle vorhanden ist und auf der anderen Seite gleichzeitig kurzzeitig hohe Strompulse über den oder die Superkondensatorbereiche abgerufen werden können.

In besonders bevorzugten Ausführungsformen handelt es sich bei der erfindungsgemäßen Energiespeicherzelle um eine gedruckte Zelle, bei der eine oder mehrere Funktionskomponenten der Zelle mit einem Druckverfahren, beispielsweise mit einem Siebdruckverfahren, hergestellt sind. In besonders bevorzugter Weise zeichnet sich die Energiespeicherzelle in dieser Hinsicht durch mindestens eines der unmittelbar folgenden zusätzlichen Merkmale a. bis c. aus:
a. Mindestens eine der Elektrodenschichten ist eine gedruckte Schicht.
b. mindestens eine der elektrischen Leiterschichten ist eine gedruckte Schicht.
c. mindesten eine der Superkondensatorschichten ist eine gedruckte Schicht.

Vorzugsweise sind die vorgenannten Merkmale a. und b. und besonders bevorzugt die Merkmale a. und b. und c. in Kombination verwirklicht.

Bei den gedruckten Elektrodenschichten kann es sich um Elektrodenschichten handeln, die allgemein für gedruckte Batterien üblich sind und die insbesondere mit einer druckfähigen Paste gedruckt werden. Derartige Verfahren sind aus dem Stand der Technik bekannt.

Neben den Elektrodenschichten, den elektrischen Leiterschichten und den Superkondensatorschichten können gegebenenfalls auch noch weitere Funktionsteile der Zelle durch Drucken hergestellt sein, beispielsweise eine der Separatorschichten. Alternativ können die Separatorschichten aber auch von einem festen porösen Separator, beispielsweise einem Vlies oder einer Folie, gebildet sein.

Vorzugsweise sind sowohl die elektrischen Leiterschichten also auch die Elektrodenschichten und die Superkondensatorschichten durch Druckverfahren gebildet, da sich auf diese Weise die Zelle in besonders praktikabler und kostengünstiger Weise herstellen lässt. Insbesondere ist ein solches Herstellungsverfahren für eine Massenproduktion besonders geeignet.

Erfindungsgemäß zeichnet sich die erfindungsgemäße Energiespeicherzelle durch die unmittelbar folgenden zusätzlichen Merkmale a. und b. aus:
a. Die erste Elektrodenschicht ist als positive Elektrodenschicht ausgebildet und umfasst Manganoxid.
b. Die zweite Elektrodenschicht ist als negative Elektrodenschicht ausgebildet und umfasst metallisches Zink oder eine metallische Zinklegierung.

Natürlich kann auch die zweite Elektrodenschicht als negative Elektrodenschicht ausgebildet sein und die erste Elektrodenschicht als positive Elektrodenschicht.

Eine derartiges auch als Zink-Braunstein-Zelle bezeichnetes Energiespeicherelement ist besonders bevorzugt, da es kostengünstig herstellbar und besonders umweltverträglich ist. Weiterhin handelt es sich bei einer Zink-Braunstein-Zelle um eine nicht-wiederaufladbare Zelle, die für viele Anwendungen, insbesondere auch für Einwegartikel, völlig ausreichend ist.

Für die Herstellung einer solchen Zink-Braunstein-Zelle kann als Anodenmaterial für die negative Elektrodenschicht zum Beispiel eine druckfähige Zinkpaste dienen, die Zinkpulver, einen geeigneten Binder und ein geeignetes Lösungsmittel umfasst. Zur Herstellung der Kathode bzw. der positiven Elektrodenschicht kann insbesondere eine druckfähige Paste eingesetzt werden, die Braunstein (MnO₂) sowie Ruß und/oder Graphit als Leitmaterial und einen geeigneten Binder und ein geeignetes Lösungsmittel umfasst.

Als Stromableiter für die negative Elektrodenschicht kommen insbesondere Silber, Kupfer und/oder Graphit infrage. Der Stromableiter der positiven Elektrodenschicht wird bevorzugt aus Silber, Nickel und/oder Graphit gebildet. Besonders bevorzugt werden zur Herstellung beider Stromableiterschichten Silberleitpasten verwendet.

Prinzipiell eignen sich auch andere Materialien für die Herstellung der erfindungsgemäßen Energiespeicherzelle. So kann es sich bei der erfindungsgemäßen Zelle beispielsweise um eine Zink-Silberoxid-Zelle handeln. Bei einer Zink-Silberoxid-Zelle umfasst die negative Elektrode als Elektrodenaktivmaterial partikuläres metallisches Zink oder eine partikuläre metallische Zinklegierung, während die positive Elektrode als Elektrodenaktivmaterial partikuläres Silberoxid umfasst.

Bei der besonders bevorzugten Ausführungsform der Energiespeicherzelle als Zink-Braunstein-Zelle ist das partikuläre metallische Zink oder die partikuläre metallische Zinklegierung in der negativen Elektrode der Zelle bzw. in dem negativen Elektrodenmaterial der zweiten Elektrodenschicht, bezogen auf das Gesamtgewicht der festen Bestandteile der negativen Elektrode, bevorzugt in einem Anteil im Bereich von 40 Gew.-% bis 99 Gew.-%, insbesondere von 40 Gew.-% bis 80 Gew.-%, enthalten.

Die Wahl eines elektrochemischen Systems mit einer zinkhaltigen negativen Elektrode bietet vor allem besondere Vorteile bei der geforderten Sicherheit der Zellen. Systeme mit zinkbasierten negativen Elektroden benötigen einen wässrigen Elektrolyten und sind damit nicht brennbar. Darüber hinaus ist Zink umweltverträglich und kostengünstig. Insofern sind Zellen mit einem wässrigen Elektrolyten besonders vorteilhaft.

Sowohl die positive als auch die negative ,Elektrodenschicht einer erfindungsgemäßen Zelle umfasst in aller Regel ein elastisches Bindemittel oder Bindemittelgemisch und/oder ein Leitfähigkeitsadditiv.

Der Anteil an dem elastischen Bindemittel oder Bindemittelgemisch beträgt in den Elektrodenschichten bevorzugt mindestens 1 Gew.-% und maximal 10 Gew.-%.

Bei dem elastischen Bindemittel oder Bindemittelgemisch handelt es sich bevorzugt um mindestens ein Mitglied aus der Gruppe mit Cellulose und deren Derivate, insbesondere Carboxymethylzellulose (CMC), Polyacrylate (PA), Polyacrylsäure (PAA), Polychlortrifluorethylen (PCTFE), Polyhexafluorpropylen (PHFP), Polyimide (PI), Polytetrafluorethylen (PTFE), Polytrifluorethylen (PTrFE), Polyvinylalkohol (PVA), Polyvinylidendifluorid (PVDF), Styrol-Butadien-Gummi (SBR) und Mischungen aus den vorgenannten Materialien.

Das Leitfähigkeitsadditiv ist in den Elektroden bevorzugt in einem Anteil im Bereich von 2,5 Gew.-% bis 35 Gew.-% enthalten. In der positiven Elektrodenschicht ist in der Regel ein deutlich höherer Anteil an einem Leitfähigkeitsadditiv enthalten als in der negativen Elektrode. Ein hoher Anteil des Metalloxids in der positiven Elektrode erhöht die Kapazität der Zelle. Für die Strombelastbarkeit ist der Anteil des mindestens einen Leitfähigkeitsadditivs jedoch von größerer Bedeutung als der Gesamtanteil des Metalloxids.

Grundsätzlich beziehen sich alle prozentualen Angaben zu Gewichtsanteilen von Komponenten in den Elektrodenschichten in der vorliegenden Anmeldung auf das Gesamtgewicht der festen Bestandteile der jeweiligen Elektrodenschicht. Die Gewichtsanteile der jeweils beteiligten Komponenten ergänzen sich dabei auf 100 Gew.-%. Vor ihrer Ermittlung ist gegebenenfalls in den Elektroden enthaltene Feuchtigkeit zu entfernen.

Als Leitfähigkeitsadditiv für die Elektroden kommt insbesondere ein kohlenstoffbasiertes Material in Frage, insbesondere aus der Gruppe mit Aktivkohle, Aktivkohlefaser, Carbid-abgeleiteter Kohlenstoff, Kohlenstoff-Aerogel, Graphit, Graphen und Kohlenstoffnanoröhrchen (CNTs). Das Leitfähigkeitsadditiv kann aber auch ein Metallpulver sein.

Besonders bevorzugt sind sowohl in der positiven als auch in der negativen Elektrodeschicht als Bindemittel oder Bindemittelgemisch eine Kombination aus einem als Elektrodenbinder geeigneten Polysaccharid, insbesondere einem Zellulosederivat, und SBR enthalten. Beispielsweise kann die positive und die negative Elektrodeschicht 0,5 Gew.-% bis 2,5 Gew.-% Carboxymethylzellulose und/oder Chitosan und 5 Gew.-% bis 10 Gew.-% SBR enthalten.

In besonders bevorzugten Ausführungsformen ist die erfindungsgemäße Energiespeicherzelle durch mindestens eines der unmittelbar folgenden zusätzlichen Merkmale gekennzeichnet:
a. Bei der ersten Separatorschicht handelt es sich um einen porösen Separator, der mit dem ersten Elektrolyten, insbesondere einem wässrigen Elektrolyten, getränkt ist (Separator-Flüssigelektrolyt-Kombination).
b. Bei der zweiten Separatorschicht handelt es sich um einen porösen Separator, der mit dem zweiten Elektrolyten, insbesondere einem wässrigen Elektrolyten, getränkt ist (Separator-Flüssigelektrolyt-Kombination).

Wie bereits erwähnt, kann es sich bei den Separatorschichten um poröse Flächengebilde, beispielsweise poröse Folien oder Vliese, handeln, die zwischen den Elektrodenschichten angeordnet werden und die vorzugsweise mit dem jeweiligen Elektrolyten getränkt werden.

Besonders bevorzugt werden als poröses Flächengebilde ein Vlies oder eine mikroporöse Kunststofffolie, z. B. mit einer Dicke im Bereich von 60 bis 120 µm und einer Porosität (Verhältnis von Hohlraumvolumen zu Gesamtvolumen) im Bereich von 35 - 60 %, verwendet. Das Vlies oder die Folie können beispielsweise aus einem Polyolefin, beispielsweise aus Polyethylen, bestehen.

An Stelle einer Separator-Flüssigelektrolyt-Kombination gemäß den obigen Ausführungen kann in der erfindungsgemäßen Zelle aber auch ein Festelektrolyt vorgesehen sein, wie er in einer bevorzugten Ausführungsform beispielsweise in der EP 2 960 967 B1 beschrieben ist.

Es können beispielsweise alkalische Elektrolyten, beispielsweise Natronlauge oder Kalilauge, verwendet werden. Wässrige Elektrolyten mit einem pH-Wert im neutralen Bereich haben allerdings den Vorteil, im Falle einer mechanischen Beschädigung der Zelle weniger gefährlich zu sein.

In einer besonders bevorzugten Ausführungsform zeichnet sich die erfindungsgemäße Zelle durch mindestens eines der unmittelbar folgenden zusätzlichen Merkmale a. und b. aus:
a. Sie umfasst einen wässrigen Elektrolyten, der ein chloridbasiertes Leitsalz enthält.
b. Die Separatoren, die zwischen den Elektrodenschichten und den Superkondensatorschichten angeordnet sind, sind mit dem Elektrolyten getränkt.

In besonders bevorzugten Ausführungsformen der Batterie sind die unmittelbar vorstehenden Merkmale a. und b. in Kombination miteinander realisiert.

Als chloridbasiertes Leitsalz sind insbesondere Zinkchlorid und Ammoniumchlorid geeignet. Es ist bevorzugt, dass sich der pH-Wert des wässrigen Elektrolyten im neutralen oder leicht sauren Bereich bewegt.

In weiteren bevorzugten Ausführungsformen kann es sich bei den Elektrolyten auch um einen Gelelektrolyten handeln. Besonders bevorzugt ist beispielsweise ein Elektrolyt-Hydrogel, das auf der Basis von nicht-ionischen quervernetzten Polymeren, z. B. Polyethylenglykol und/oder Diacrylat-Polyethylenglykol, und kationischen Polymeren, z. B. Cellulose, aufgebaut ist.

Bei den elektrischen Leiterschichten der erfindungsgemäßen Zelle handelt es sich insbesondere um metallische Strukturen, um die elektrische Leitfähigkeit bereitzustellen. In besonders bevorzugter Weise umfassen die Leiterschichten Silber oder eine Silberlegierung. Prinzipiell eignen sich auch andere metallische Materialien, Silber oder eine Silberlegierung ist jedoch insbesondere für die Ausführungsform eine Zink-Braunstein-Zelle besonders bevorzugt.

Die elektrischen Leiterschichten werden dabei insbesondere von Metallpartikeln, insbesondere Silberpartikeln oder Partikel aus einer Silberlegierung, gebildet. Wie bereits erwähnt können solche Leiterschichten mit besonderem Vorteil durch Druckverfahren hergestellt werden. Druckbare Leitpasten mit Silberpartikeln zur Herstellung von Leiterschichten sind aus dem Stand der Technik bekannt und im Handel frei erhältlich.

Die Leiterschichten der erfindungsgemäßen elektrochemischen Energiespeicherzelle zeichnen sich weiterhin vorzugsweise durch mindestens eines der unmittelbar folgenden zusätzlichen Merkmale a. und/oder b. aus:
a. Die erste elektrische Leiterschicht und/oder die zweite elektrische Leiterschicht weisen eine Schichtdicke in einem Bereich von 10 bis 100 µm auf.
b. Die erste elektrische Leiterschicht und/oder die zweite elektrische Leiterschicht weisen eine im Wesentlichen gleichmäßige Schichtdicke auf.

Vorzugsweise sind die vorgenannten Merkmale a. und b. in Kombination miteinander verwirklicht.

Zum Schutz der elektrischen Leiterschichten ist in besonders bevorzugten Ausführungsformen der erfindungsgemäßen Energiespeicherzelle das unmittelbar folgende zusätzliche Merkmal a. vorgesehen:
a. Die erste elektrische Leiterschicht und/oder die zweite elektrische Leiterschicht sind zumindest bereichsweise mit einer Carbonschicht beschichtet.

Bei der Carbonschicht handelt es sich um eine elektrisch leitende Schicht aus Kohlenstoff, die insbesondere zwischen der jeweiligen elektrischen Leiterschicht, bei der es sich in der Regel um eine metallische Schicht handelt, und der jeweiligen Elektrodenschicht angeordnet ist. Weiterhin ist eine Carbonschicht vorzugsweise auch oder gegebenenfalls nur zwischen den elektrischen Leiterschichten und den Superkondensatorschichten vorgesehen.

Die Carbonschicht schützt dabei die metallische Leiterschicht, da sie einen unmittelbaren Kontakt der metallischen Schicht mit einem flüssigen Elektrolyten der Zelle erschwert oder sogar unterbindet. Insbesondere, wenn die elektrische Leiterschicht Silberpartikel umfasst, besteht die Gefahr, dass sich Silber im Elektrolyten löst und es zu einer Schwächung oder gar Zerstörung der elektrischen Leiterschicht kommt. Die Carbonschicht kann die elektrische Leiterschicht aus Silber daher in besonders vorteilhafter Weise vor einem unmittelbaren Kontakt mit dem Elektrolyten schützen.

Die Carbonschicht kann beispielsweise eine Dicke in einem Bereich von 5 µm bis 30 µm aufweisen, besonders bevorzugt ist ein Bereich von 10 µm bis 20 µm.

Es kann weiterhin bevorzugt sein, dass die Carbonschicht nach dem Aufbringen einer Wärmebehandlung unterzogen wird, wodurch die Dichtigkeit der Carbonschicht verbessert werden kann.

Bei herkömmlichen Energiespeicherzellen sind in der Regel die elektrischen Leiterschichten bzw. die Stromkollektoren flächig ausgebildet, um die Elektrodenschichten vollflächig kontaktieren zu können. Dies kann auch bei der erfindungsgemäßen Energiespeicherzelle vorgesehen sein.

In einer besonders bevorzugten Ausführungsform der erfindungsgemäßen Energiespeicherzelle zeichnet sich die Zelle im Hinblick auf die elektrischen Leiterschichten jedoch durch mindestens eines der unmittelbar folgenden zusätzlichen Merkmale aus:
a. Die erste elektrische Leiterschicht ist nicht vollflächig ausgebildet und bedeckt vorzugsweise einen Anteil von 10 bis 80 %, vorzugsweise von 10 bis 60 %, derjenigen Fläche des elektrisch isolierenden Substrats, auf der sich die erste elektrische Leiterschicht erstreckt.
b. Die zweite elektrische Leiterschicht ist nicht-vollflächig ausgebildet und bedeckt vorzugsweise einen Anteil von 10 bis 80 %, vorzugsweise von 10 bis 60 %, derjenigen Fläche des elektrisch isolierenden Substrats, auf der sich die zweite elektrische Leiterschicht erstreckt.

Vorzugsweise sind die vorgenannten Merkmale a. und b. in Kombination miteinander verwirklicht.

Der besondere Vorteil bei der nicht-vollflächigen Ausbildung der Leiterschichten liegt in einer möglichen Materialeinsparung, die insbesondere bei der Verwendung von Silber für die Leiterschichten ein erhebliches Kostenreduzierungspotential für die Zellen bietet.

In besonders bevorzugten Ausführungsformen zeichnet sich die erfindungsgemäße Zelle im Hinblick auf die Leiterschichten durch mindestens eines der unmittelbar folgenden zusätzlichen Merkmale a. und b. aus:
a. Die erste elektrische Leiterschicht umfasst eine Mehrzahl von miteinander in Kontakt stehenden Leiterbahnen.
b. Die zweite elektrische Leiterschicht umfasst eine Mehrzahl von miteinander in Kontakt stehenden Leiterbahnen.

Vorzugsweise sind die vorgenannten Merkmale a. und b. in Kombination miteinander verwirklicht.

Über die Mehrzahl der miteinander in Kontakt stehenden Leiterbahnen können die Elektronenströme der Zelle trotz der nicht-vollflächigen Leiterschicht dennoch effektiv abgeleitet werden, so dass hierdurch bei Ausnutzung des Einsparungspotentials eine ausreichend gute Performance der Zelle gewährleistet wird.

In einer ersten besonders geeigneten Ausgestaltungsmöglichkeit der nicht-vollflächigen Leiterschichten zeichnen sich die elektrischen Leiterschichten durch mindestens eines der unmittelbar folgenden zusätzlichen Merkmale a. bis c. aus:
a. Die erste elektrische Leiterschicht umfasst eine zentrale Leiterbahn sowie auf vorzugsweise einer Seite der zentralen Leiterbahn eine Mehrzahl von Leiterfingern, die in vorzugsweise regelmäßigen Abständen an die zentrale Leiterbahn angebunden sind,
b. die zweite elektrische Leiterschicht umfasst eine zentrale Leiterbahn sowie auf vorzugsweise einer Seite der zentralen Leiterbahn eine Mehrzahl von Leiterfingern, die in vorzugsweise regelmäßigen Abständen an die zentrale Leiterbahn angebunden sind,
c. die zentrale Leiterbahn der ersten elektrischen Leiterschicht und die zentrale Leiterbahn der zweiten elektrischen Leiterschicht sind in einem Winkel von 90° zueinander versetzt in der Zink-Braunstein-Zelle angeordnet.

Vorzugsweise sind die vorgenannten Merkmale a. und b., besonders bevorzugt die vorgenannten Merkmale a. und b. und c., gemeinsam miteinander verwirklicht.

Bei den Leiterfingern handelt es sich um eine Form der vorgenannten Leiterbahnen, die sich dadurch auszeichnet, dass sie an die zentrale Leiterbahn der jeweiligen elektrischen Leiterschicht angebunden sind bzw. davon gewissermaßen abzweigen.

Durch die versetzte Anordnung der Strukturen der Leiterschichten in der gestapelten Anordnung der Elektroden und der Superkondensatorschichten gemäß dem vorgenannten Merkmal c. ist es in besonders vorteilhafter Weise möglich, insbesondere bei einer Verschaltung von mehreren derartigen Zellen zu einer Batterie einen besonders geeigneten und günstigen Aufbau und eine geeignete Verschaltung der einzelnen Zellen über die elektrischen Leiterschichten zu erreichen. In einer entsprechenden Batterie ist es dabei vorzugsweise vorgesehen, dass nur bei einem Teil der die Batterie bildenden Zellen die Leiterstrukturen in einem Winkel von 90° zueinander versetzt sind, beispielsweise bei einer Batterie mit vier Zellen bei den beiden äußeren Zellen.

In besonders bevorzugten Ausgestaltungen der elektrischen Leiterschichten zeichnen sich die Leiterbahnen bzw. Leiterfinger durch mindestens eines der unmittelbar folgenden zusätzlichen Merkmale a. bis d. aus:
a. Die zentrale Leiterbahn der ersten elektrischen Leiterschicht und/oder der zweiten elektrischen Leiterschicht weisen eine im Wesentlichen gleichmäßige Breite auf,
b. die Leiterfinger erstrecken sich parallel zueinander,
c. die Leiterfinger weisen eine im Wesentlichen gleichmäßige Breite auf,
d. die Leiterfinger weisen eine in Richtung der zentralen Leiterbahn sich vergrößernde Breite auf.

Die vorgenannten Merkmale c. und d. sind dabei als Alternativen zu verstehen. In bevorzugter Weise sind die vorgenannten Merkmale a. und b. oder a. und b. und c. gemeinsam miteinander verwirklicht. In einer anderen bevorzugten Ausführungsform sind die vorgenannten Merkmale a. und d. gemeinsam miteinander verwirklicht.

Je nach Größe und Anwendungen der Zelle können die Leiterschichten und insbesondere die Form und die Zahl der Leiterfinger variiert und angepasst werden.

Bei der bevorzugten Ausgestaltung gemäß den vorgenannten Merkmalen a. und b. und vorzugsweise a. und b. und c. weist die elektrische Leiterschicht beispielsweise die Form eines Kammes auf, wobei die "Zinken" des Kammes in die Fläche der Leiterstruktur ragen und wobei der "Rücken" des Kammes als zentrale Leiterbahn den Ionenstrom der Elektrodenschicht sammelt und ableitet (Kammstruktur). Entsprechendes gilt für die Kontaktierung der Superkondensatorschichten über derartige nicht-vollflächige Leiterstrukturen.

Bei der bevorzugten Ausgestaltung gemäß den vorgenannten Merkmalen a. und d. kann die Leiterschicht die Form von an der Basis miteinander verbundenen Zacken aufweisen, wobei an der breiteren Basis der Zacken eine Verbindung in Form der zentralen Leiterbahn vorgesehen ist, die den Elektronenstrom sammelt und ableitet. Die Zacken bzw. Spitzen dieser Struktur ragen in die Fläche der Leiterschicht und/oder der Superkondensatorschicht hinein und sammeln den Ionenstrom in der Fläche der Elektrodenschicht und/oder der Superkondensatorschicht. Für diese Ausführungsform werden die Leiterfinger mit dem Abstand zur Kontaktebene, also zu der zentralen Leiterbahn, linear schmaler (Zackenstruktur).

Die Ausführungsform der elektrischen Leiterschichten als Zackenstruktur hat den besonderen Vorteil, dass in der Nähe der zentralen Leiterbahn, wo der meiste Strom fließt, die Leiterbahnen der Leiterschicht die größte Breite haben. Zu den weiter entlegenen Bereichen wird die Struktur immer schmaler. Da die Leiterbahnen im Bereich des höchsten Stromflusses relativ breit bzw. flächig verteilt ist, kommt es nicht zu Engstellen für den Stromfluss. Bei einer im Wesentlichen gleichbleibenden Dicke der Schicht erhöht sich der Querschnitt der Leiterfinger in Richtung der zentralen Leiterbahn. Diese Anpassung an die lokale Stromdichte gewährleistet damit eine besonders vorteilhafte Ausführungsform.

Die Ausführungsform der elektrischen Leiterschicht als Kammstruktur hat den besonderen Vorteil, dass hiermit eine besonders große Materialeinsparung realisiert werden kann.

In besonders bevorzugten Ausführungsformen kann bei der Zackenstruktur die Abdeckung der Elektrodenschicht und/oder der Superkondensatorschicht durch die Leiterstruktur in einem Bereich von 50 % bis 60 % liegen. Bei der Kammstruktur kann die Abdeckung der Elektrodenschicht und/oder der Superkondensatorschicht durch die Leiterstruktur vorzugsweise in einem Bereich von 10 % bis 40 % liegen, besonders bevorzugt in einem Bereich von 20 % bis 30 %.

In einer zweiten besonders geeigneten Ausgestaltungsmöglichkeit der nicht-vollflächigen Leiterschichten zeichnen sich die elektrischen Leiterschichten durch mindestens eines der unmittelbar folgenden zusätzlichen Merkmale a. bis e. aus:
a. Die erste elektrische Leiterschicht umfasst eine Mehrzahl von sich kreuzenden Leiterbahnen,
b. die zweite elektrische Leiterschicht umfasst eine Mehrzahl von sich kreuzenden Leiterbahnen,
c. die sich kreuzenden Leiterbahnen umfassen mehrere Leiterbahnen in paralleler Ausrichtung,
d. die sich kreuzenden Leiterbahnen umschließen viereckige Freibereiche.
e. die sich kreuzenden Leiterbahnen bilden eine Gitterstruktur.

Vorzugsweise sind die vorgenannten Merkmale a. und b. gemeinsam miteinander verwirklicht. Besonders bevorzugt sind die vorgenannten Merkmale a. bis e. gemeinsam miteinander verwirklicht.

Bei dieser Ausführungsform der Erfindung bildet die erste und/oder zweite elektrische Leiterschicht eine Gitterstruktur, insbesondere eine regelmäßige Gitterstruktur, über die die Elektrodenschichten und/oder die Superkondensatorschichten in gleichmäßiger Weise angebunden werden. Zwischen den sich kreuzenden Leiterbahnen sind dabei Freiflächen vorhanden, die eine Materialeinsparung erlaubt, die insbesondere bei der Verwendung einer Silberpaste eine besondere Kostenersparnis ermöglicht. Die gleichmäßige Abdeckung der Elektrodenschichten und/oder der Superkondensatorschichten mit der Gitterstruktur bewirkt eine gute und gleichmäßige elektrische Anbindung, ohne dass es zu großen Einbußen in der Performance der Zelle kommt.

Bei der Struktur mit sich kreuzenden Leiterbahnen können verschiedene Ausbildungen der resultierenden Gitterstruktur realisiert werden, insbesondere können rechteckige Freiflächen ausgebildet sein. Dabei sind quadratische Freiflächen oder rautenförmige Freiflächen möglich. Prinzipiell sind auch andere Strukturen denkbar.

Der Abdeckungsgrad bei den Gitterstrukturen kann beispielsweise in einem Bereich von 10 bis 40 % liegen.

Insgesamt lässt sich die erste und/oder zweite elektrische Leiterschicht in diesen Ausführungsformen so beschreiben, dass sie eine nicht-vollflächige Struktur ausbilden, die insbesondere durch eine Vielzahl von Durchbrechungen oder Freiflächen gekennzeichnet ist. Bei der erwähnten Gitterstruktur können die Durchbrechungen beispielsweise einen Umriss ohne Ecken, insbesondere kreisförmige oder ovale Aussparungen, oder einen Umriss mit drei oder mehr Ecken, insbesondere vier Ecken oder auch fünf Ecken oder mehr, aufweisen. Diese Durchbrechungen sind vorzugsweise im Wesentlichen gleichmäßig über den Bereich mit den Durchbrechungen im Fall einer regelmäßigen Gitterstruktur angeordnet.

In besonders bevorzugter Weise können zwei verschiedene Strukturen bei den elektrischen Leiterschichten einer erfindungsgemäßen Zelle miteinander kombiniert werden. Das heißt, dass insbesondere die erste elektrische Leiterschicht eine andere Struktur als die zweite elektrische Leiterschicht der Zelle hat. Hintergrund dieser bevorzugten Ausgestaltung der erfindungsgemäßen Zelle kann vor allem sein, dass die negative Elektrode der Zelle im Allgemeinen zumindest im frischen Zustand eine bessere Leitfähigkeit als die positive Elektrode hat. Aus diesem Grund kann es ausreichend sein, wenn die Leiterschicht, die der negativen Elektrode zugeordnet ist, einen geringeren Abdeckungsgrad als die der positiven Elektrode zugeordnete Leiterschicht aufweist, um so eine maximale Kosteneinsparung zu erzielen. So kann beispielsweise die der negativen Elektrode zugeordnete elektrische Leiterschicht die oben erläuterte Kammstruktur und die der positiven Elektrode zugeordnete elektrische Leiterschicht die oben erläuterte Zackenstruktur aufweisen.

Es sind auch andere Kombinationen möglich, beispielsweise die Kombination einer Kammstruktur mit einer Gitterstruktur oder die Kombination einer Zackenstruktur mit einer Gitterstruktur oder die Kombination verschiedenartiger Gitterstrukturen. Weiterhin ist es möglich, dass eine nicht-vollflächige Leiterschicht mit einer herkömmlichen, vollflächigen Leiterschicht kombiniert wird. In der Regel ist es dabei vorteilhaft, wenn die elektrische Leiterschicht, die der positiven Elektrode zugeordnet ist, eine größere Abdeckung bietet als die elektrische Leiterschicht, die der negativen Elektrode zugeordnet ist. Je nach Anwendungsfall kann es sich aber auch umgekehrt verhalten.

Die Erfindung umfasst weiterhin eine Batterie, die mindestens zwei elektrochemische Energiespeicherzellen, darunter mindestens eine Energiespeicherzelle, wie sie oben beschrieben wurde, umfasst. wobei die mindestens zwei Energiespeicherzellen innerhalb der Batterie elektrisch miteinander verschaltet sind.

In bevorzugter Weise zeichnet sich die erfindungsgemäße Batterie durch das unmittelbar folgende zusätzliche Merkmal aus:
a. Die Superkondensatorbereiche der elektrochemischen Energiespeicherzellen der Batterie befinden sich in einem terminalen Abschnitt der Batterie, wobei in dem terminalen Abschnitt der Batterie elektrische Anschlusskontakte zum Abgreifen der elektrischen Energie durch einen Verbraucher vorgesehen sind.

Diese Ausgestaltung gemäß dem vorgenannten Merkmal a. hat den besonderen Vorteil, dass sich die Superkondensatorbereiche der Energiespeicherzellen, die in der Batterie zusammengefasst sind, alle in einem Bereich der Batterie befinden, der dem elektrischen Verbraucher zugewandt ist. Bei der Anforderung eines Strompulses, insbesondere eines Hochstrompulses, steht daher die in den Superkondensatorbereichen gespeicherte Energie unmittelbar zur Verfügung und kann sehr schnell abgerufen werden. Dieser Hochstrombereich befindet sich dabei gewissermaßen im Kopf der Batterie, so dass der angeforderte Strom auf kürzestem Weg den Verbraucher erreichen kann. In den Pausen zwischen den angeforderten Stromspitzen werden die Superkondensatorbereiche durch die faradayschen Batterieanteile von hinten gewissermaßen wieder aufgeladen.

In besonders bevorzugten Ausgestaltungen der erfindungsgemäßen Batterie zeichnet sich die Batterie durch mindestens eines der unmittelbar folgenden zusätzlichen Merkmale aus:
a. Die Batterie umfasst mindestens zwei, bevorzugt vier, elektrochemische Energiespeicherzellen.
b. Die mindestens zwei, bevorzugt vier, elektrochemischen Energiespeicherzellen sind seriell miteinander verschaltet, so dass sich ihre Spannungen addieren.
c. Die elektrische Verschaltung der einzelnen Energiespeicherzellen untereinander erfolgt über gemeinsame, entgegengesetzt gepolte Elektroden benachbarter Energiespeicherzellen verbindende elektrische Leiterschichten.

Vorzugsweise sind die vorgenannten Merkmale a. und b. und besonders bevorzugt die Merkmale a. bis c. in Kombination miteinander realisiert.

Derartige Batterien können mit einem sehr dünnen und flexiblen Aufbau gefertigt werden, wodurch solche Batterien für vielfältige Anwendungen, insbesondere auch für die Energieversorgung von Alltagsartikeln oder von Einwegartikeln, genutzt werden können. Beispielsweise kann eine erfindungsgemäße Batterie eine Schichtdicke von 2 mm oder weniger aufweisen.

Es ist besonders bevorzugt, dass in der Reihe der mindestens zwei, bevorzugt vier, seriell miteinander verschalteten Energiespeicherzellen die erste und die letzte Energiespeicherzelle in der Reihe gemäß der vorliegenden Erfindung ausgebildet sind und die erste Energiespeicherzelle in der Reihe eine erste oder zweite elektrische Leiterschicht umfasst, die einen Bereich aufweist, der zum Abgreifen elektrischer Energie der Energiespeicherzelle durch einen elektrischen Verbraucher vorgesehen ist, und die zweite Energiespeicherzelle in der Reihe eine erste oder zweite elektrische Leiterschicht umfasst, die einen Bereich aufweist, der zum Abgreifen elektrischer Energie der Energiespeicherzelle durch einen elektrischen Verbraucher vorgesehen ist. Es ist weiterhin bevorzugt, dass die Batterie ein Gehäuse umfasst, das die Zellen umschließt und dass die Bereiche zum Abgreifen elektrischer Energie außerhalb des Gehäuses liegen. Weiterhin ist bevorzugt, dass die erste Zelle in der Reihe einen Superkondensatorbereich umfasst, der ihre erste oder zweite elektrische Leiterschicht zwischen dem zum Abgreifen elektrischer Energie vorgesehenen Bereich und ihrem Elektrodenbereich kontaktiert, und dass die letzte Zelle in der Reihe einen Superkondensatorbereich umfasst, der ihre erste oder zweite elektrische Leiterschicht zwischen dem zum Abgreifen elektrischer Energie vorgesehenen Bereich und ihrem Elektrodenbereich kontaktiert.

Es ist besonders bevorzugt, dass sich die erfindungsgemäßen Zellen sowie die Zellen der erfindungsgemäßen Batterie durch mindestens eines der unmittelbar folgenden zusätzlichen Merkmale a. bis g. auszeichnen:
a. Ihre Elektrodenschichten sind rechteckig oder in Form von Streifen ausgebildet.
b. Entgegengesetzt gepolte Elektrodenschichten der einzelnen Zellen nehmen auf den Substraten jeweils die gleiche Fläche ein.
c. Die elektrisch miteinander verbundenen Elektrodenschichten sowie die elektrisch nicht miteinander Elektrodenschichten sind jeweils parallel zueinander ausgerichtet.
d. Gleich gepolte Elektrodenschichten der einzelnen Zellen weisen im Wesentlichen identische Dimensionen auf.
e. Die Elektrodenschichten weisen
   - eine Länge im Bereich von 1 cm bis 25, bevorzugt von 5 cm bis 20 cm, und
   - eine Breite im Bereich von 0,5 bis 10 cm, bevorzugt von 1 cm bis 5 cm, auf.
f. Die elektrischen Leiterstrukturen weisen eine Dicke im Bereich von 2 µm bis 250 µm, bevorzugt von 2 µm bis 100 µm, besonders bevorzugt von 2 µm bis 25 µm, weiter bevorzugt von 5 µm bis 10 µm, auf.
g. Die Elektrodenschichten weisen eine Dicke im Bereich von 10 µm bis 350 µm auf.

Bevorzugt sind die unmittelbar vorstehenden Merkmale a. bis g. in Kombination miteinander realisiert.

Die positiven und die negativen Elektrodenschichten weisen jeweils besonders bevorzugt eine Dicke im Bereich von 10 µm bis zu 250 µm auf. Es kann bevorzugt sein, dass die positiven Elektrodenschichten etwas dicker als die negativen Elektrodenschichten ausgebildet sind, da letztere in vielen Fällen eine höhere Energiedichte aufweisen. So kann es in einigen Anwendungsfällen bevorzugt sein, die negativen Elektrodenschichten mit einer Dicke von 30 µm bis 150 µm und die positiven Elektrodenschichten mit einer Dicke von 180 bis 350 µm zu bilden. Durch die Einstellung der Dicken lassen sich die Kapazitäten von positiver und negativer Elektrode balancieren. Es ist diesbezüglich bevorzugt, dass die positive Elektrode gegenüber der negativen Elektrode überdimensioniert wird.

In besonders bevorzugten Ausführungsformen der erfindungsgemäßen Batterie zeichnet sich die Batterie durch mindestens eines der unmittelbar folgenden zusätzlichen Merkmale aus:
a. Die Batterie ist für eine Spannung von 6 Volt ausgelegt.
b. Die Batterie hat eine Kapazität in einem Bereich von 100 bis 400 mF, insbesondere in einem Bereich von 250 bis 350 mF.
c. Die Batterie hat eine spezifische Kapazität in einem Bereich von 10 bis 100 mF/cm², insbesondere in einem Bereich von 60 bis 70 mF/cm².

Eine solche bevorzugte Batterie kann beispielsweise für Strompulse mit 220 mA für 130 ms ausgelegt sein. Je nach Anwendung können diese Parameter jedoch angepasst werden und die Auslegung der Batterie, insbesondere auch im Hinblick auf den Flächenanteil der elektrischen Leiterschichten, die von den Superkondensatorschichten belegt werden, angepasst werden.

Eine solche Batterie eignet sich insbesondere für Anwendungen, bei denen kurzfristig hohe Ströme benötigt werden. Einem solchen Strompuls folgt im Allgemeinen eine Phase mit geringen Strömen, beispielsweise Grundströme der Elektronik wie beispielsweise im Sleep-Mode. Solche Phasen mit geringen Strömen können beispielsweise für 10 bis 30 Minuten, beispielsweise 15 Minuten, nach einem angeforderten Hochstrompuls folgen. In dieser Zeit zwischen den angeforderten Pulsen laden die Hochstrombereiche bzw. die Superkondensatorbereiche der Batterie nach, so dass die Batterie als solche geschont wird. Eine solche Batterie kann beispielsweise so ausgelegt werden, dass 500 Signale oder gegebenenfalls 1.000 bis 1.500 Signale (Hochstrompulse) bereitgestellt werden können. Diese Funktionsweise der erfindungsgemäßen Batterie kann insbesondere genutzt werden, um bei einer Elektronik ein Funksignal über größere Distanzen abzusetzen.

Die Erfindung umfasst weiterhin die Verwendung einer Batterie gemäß der obigen Beschreibung zur Bereitstellung von Hochstrompulsen im Bereich von 100 bis 400 mA, insbesondere 200 bis 300 mA, für eine Zeitdauer von 50 bis 250 ms, insbesondere 100 bis 200 ms. Eine solche bevorzugte Verwendung der Batterie liegt insbesondere in der Bereitstellung von Strompulsen für LTE. Die Zeit zwischen den Pulsen kann beispielsweise zwischen 10 und 20 Minuten betragen, z. B. 15 Minuten. In dieser Zeit laden die Superkondensatorbereiche nach.

Eine derartige Verwendung der Batterie eignet sich insbesondere für eine Verwendung im Zusammenhang mit Funketiketten. Dabei ist es zweckmäßigerweise vorgesehen, dass die Batterie die hierfür benötigte Energie über einen Zeitraum von beispielsweise mehreren Monaten liefern kann, wobei über diesen Zeitraum eine entsprechende Anzahl von Signalen gesendet werden kann, die auf den angeforderten Hochstrompulsen basieren.

Selbstverständlich ist die Anwendung für die Bereitstellung von Pulsen nicht auf LTE beschränkt. In entsprechender Weise eignet sich die erfindungsgemäße Batterie auch für die Bereitstellung von Hochstrompulsen für andere Datenübertragungsstandards, beispielsweise nach dem Wi-Fi-Standard (IEEE 802.11) oder dem Bluetooth-Standard (IEEE 802.15.1), oder für andere Anwendungen, bei denen Hochstrompulse genutzt werden.

Weitere Merkmale und Vorteile der Erfindung ergeben sich aus der nachfolgenden Beschreibung von Ausführungsbeispielen in Verbindung mit den Zeichnungen. Hierbei können die einzelnen Merkmale jeweils für sich oder in Kombination miteinander verwirklicht sein.

### KURZBESCHREIBUNG DER ZEICHNUNGEN

In den Zeichnungen zeigen:
- Fig. 1: Querschnitt durch eine Batterie mit vier in Reihe geschalteten einzelnen Zellen mit gestapelten Elektrodenschichten (Schichtstapel);
- Fig. 2: bevorzugte Ausführungsform einer erfindungsgemäßen Batterie mit vier in Reihe geschalteten einzelnen Zellen, jeweils mit Elektrodenbereich und Superkondensatorbereich in einer Ansicht von unten (A) und von oben (B);
- Fig. 3: Darstellung der Ausführungsform der erfindungsgemäßen Batterie aus Fig. 2 in der Ansicht von unten mit Illustrierung des Stromverlaufs während einer Pulsbelastung (A) und in einer Pause zwischen Pulsbelastungen (B); und
- Fig. 4: Impedanzspektren in Nyquist-Darstellung des Superkondensatorbereichs (A) im Vergleich mit dem Elektrodenbereich (B) einer erfindungsgemäßen Batterie.

### DETAILLIERTE BESCHREIBUNG DER AUSFÜHRUNGSBEISPIELE

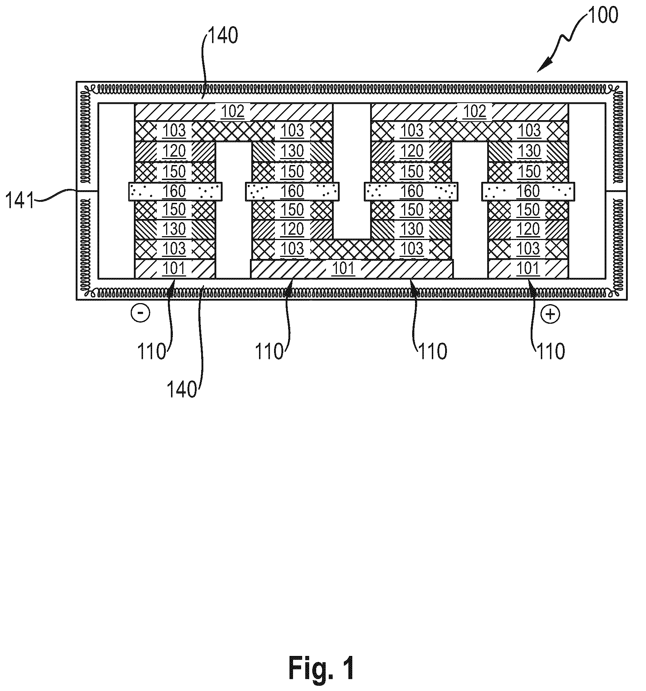

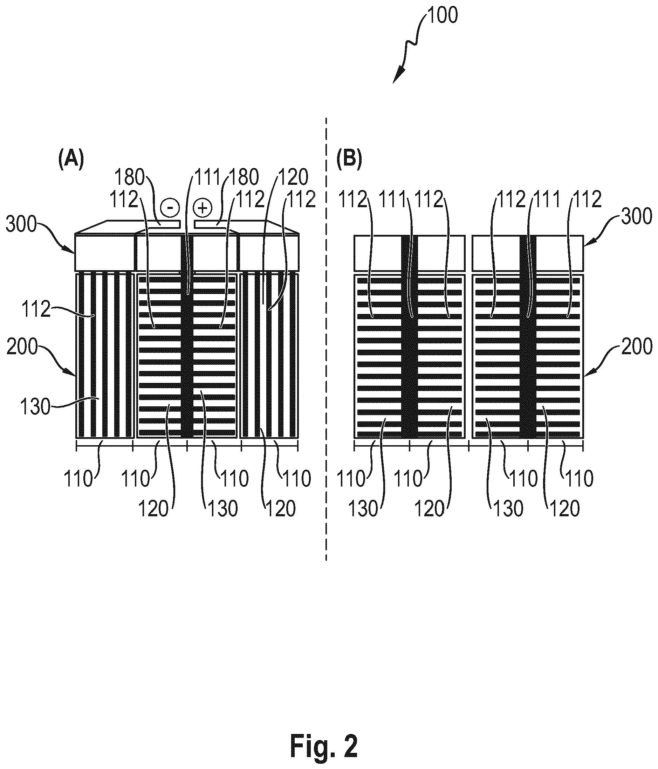

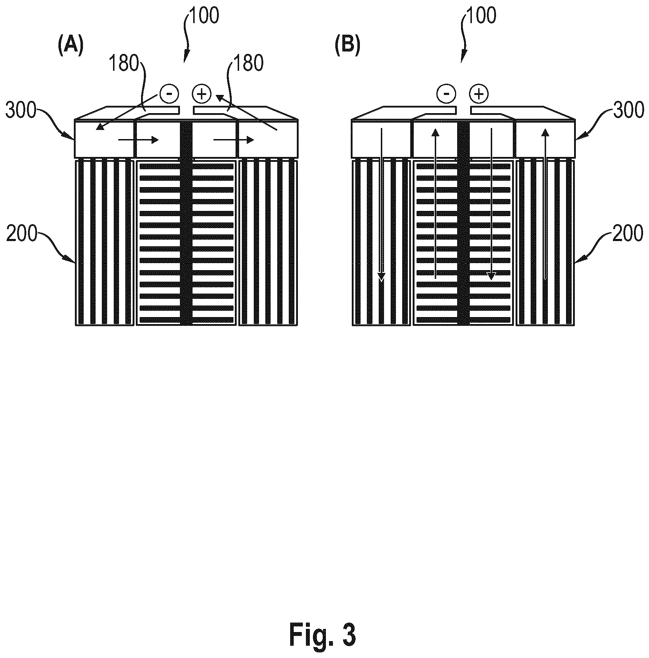

**Fig. 1** zeigt eine Schnittdarstellung durch den Elektrodenbereich einer Batterie 100 mit einer gestapelten Anordnung der Elektrodenschichten 120, 130 der einzelnen elektrochemischen Zellen 110 der Batterie 100. Der erfindungsgemäße Superkondensatorbereich ist in dieser Darstellung nicht sichtbar und wird anhand der nachfolgenden Erläuterungen zu den Fig. 2 und 3 näher dargestellt.

Die in Fig. 1 im Querschnitt dargestellte Batterie 100 umfasst vier als Schichtstapel ausgebildete einzelne Zellen 110. Der links liegende Schichtstapel der Zelle 110 wird von unten nach oben von einer ersten elektrischen Leiterschicht 101, einer darauf angeordneten Carbonschicht 103, einer zweiten Elektrodenschicht 130 mit negativem Elektrodenmaterial, einer Elektrolytschicht 150, einer Separatorschicht 160, einer weiteren Elektrolytschicht 150, einer ersten Elektrodenschicht 120 aus positivem Elektrodenmaterial, einer weiteren Carbonschicht 103 und einer zweiten elektrischen Leiterschicht 102 gebildet. In diesem links liegenden Schichtstapel ist die zweite Elektrodenschicht 130 mit dem negativen Elektrodenmaterial der ersten elektrischen Leiterschicht 101 und die erste Elektrodenschicht 120 mit dem positiven Elektrodenmaterial der zweiten elektrischen Leiterschicht 102 zugeordnet. Die Polaritäten des benachbarten Schichtstapels sind jeweils umgekehrt. Die elektrischen Leiterschichten 101 und 102 befinden sich jeweils auf einer ersten bzw. zweiten Fläche eines elektrisch isolierenden Folie 140, welche die Hülle oder das Gehäuse der Batterie 100 bildet. Teilbereiche der Folie dienen hier als erstes und als zweites Substrat im Sinn der Erfindung.

Bei der Herstellung der Batterie 100 werden die jeweiligen Schichten einer Hälfte des Stapels zunächst insbesondere durch Druckverfahren auf die flächig ausgebreitete elektrisch isolierende Folie 140 aufgebracht. Anschließend werden die Stapel der einzelnen Zellen 110 durch Zusammenklappen bzw. Umschlagen der elektrisch isolierenden Folie 140 entlang der Falzlinie 141 zusammengefügt. Die elektrisch isolierende Folie 140 kann nach dem Umschlagen beispielsweise verschweißt oder verklebt werden und so ein geschlossenes Gehäuse bilden, in dem die Schichtstapel der einzelnen Zellen 110 angeordnet sind.

Der Separator 160 wird auf beiden Seiten von den Elektrolytschichten 150 eingerahmt. Da die Elektrolytschichten 150 durch ihren Anteil an elektrisch nicht leitenden Komponenten dazu beitragen, die positive Elektrodenschicht 120 und die negative Elektrodenschicht 130 elektrisch voneinander zu isolieren, können die Elektrolytschichten 150 als Bestandteile des Separators 160 angesehen werden.

Die ersten und zweiten elektrischen Leiterschichten 101 und 102 der jeweiligen Schichtstapel sind so ausgebildet, dass jeweils eine der elektrischen Leiterschichten zwei benachbarten Schichtstapel miteinander verbindet. In diesem Ausführungsbeispiel befinden sich auf der Oberseite der Schichtstapel zwei Leiterschichten 102, die jeweils die beiden linken und die beiden rechten Schichtstapel miteinander verbinden. Auf der unteren Seite verbindet die zweite elektrische Leiterschicht 101 die beiden mittleren Schichtstapel miteinander. Rechts und links davon auf der unteren Seite der Schichtstapel bilden die jeweils zweiten elektrischen Leiterschichten 101 bzw. daran angeschlossene Anschlüsse den Minuspol und den Pluspol der Batterie bzw. die Anschlusskontakte nach außen. Im Bereich der Anschlusskontakte sind die elektrischen Leiterstrukturen 101 nicht mit Elektrodenmaterial bedeckt. Über die Anschlusskontakte ist die von der Batterie 100 gelieferte Spannung von außen abgreifbar.

Die Orientierung der die Einzelzellen 110 bildenden Schichtstapel bei benachbarten Schichtstapeln ist jeweils mit entgegengesetzter Polarität ausgebildet. Hieraus ergibt sich, dass die elektrischen Leiterschichten 101, 102 abwechselnd entweder als erste bzw. als zweite elektrische Leiterschicht im Sinne der obigen Ausführungen zu verstehen sind. Der Minuspol der Batterie 100 wird daher auf der linken Seite in dieser Darstellung von einer der elektrischen Leiterschichten mit dem Bezugszeichen 101 gebildet. Der positive Pol der Batterie wird auf der rechten Seite in dieser Darstellung von einer der elektrischen Leiterschichten mit ebenfalls dem Bezugszeichen 101 gebildet.

Die einzelnen Zellen 110 der Batterie 100 sind vorzugsweise als Zink-Braunstein-Zellen ausgebildet. Jede der Zellen ist beispielsweise so ausgelegt, dass sie eine Nennspannung von etwa 1,5 V liefert. Insgesamt kann daher mit der Batterie 100 aus vier Zellen eine Nennspannung von ca. 6 V bereitgestellt werden.

**Fig. 2** zeigt eine schematische Ansicht einer erfindungsgemäße Batterie 100 mit einem gemeinsamen Elektrodenbereich 200 und einem gemeinsamen terminalen Superkondensatorbereich 300, der auch als Hochstrombereich bezeichnet werden kann. Der gemeinsame Elektrodenbereich 200 setzt sich aus den Elektrodenbereichen der einzelnen Zellen 110 und der gemeinsame Superkondensatorbereich 300 aus den Superkondensatorbereichen der einzelnen Zellen 110 zusammen. Im Folgenden werden der gemeinsame Elektrodenbereich 200 und der gemeinsame Superkondensatorbereich 300 der Einfachheit halber als Elektrodenbereich 200 und als Superkondensatorbereich 300 bezeichnet. Der Elektrodenbereich 200 wird dabei von vier seriell miteinander verschalteten einzelnen Zellen 110 mit jeweils gestapelter Anordnung der Elektroden gebildet, entsprechend der Struktur, die anhand des in Fig. 1 gezeigten Querschnitts durch die Schichtstapel erläutert wurde. Dabei entspricht die in Fig. 2 links gezeigte Darstellung (A) einer Ansicht auf die Batterie gemäß Fig. 1 von unten, auch als Vorderseite bezeichnet. Die Darstellung (B) auf der rechten Seite der Fig. 2 zeigt eine Ansicht auf die Batterie gemäß Fig. 1 von oben, auch als Rückseite bezeichnet.

Die gestrichelte Linie zwischen den Teilfiguren A und B deutet eine Falzlinie an, an der die beiden Hälften der Batterie spiegelbildlich zusammengeklappt sind, um so die entsprechenden Schichtstapel zu bilden.

Aus Fig. 2 geht neben der Untergliederung der Batterie 100 in den gemeinsamen Elektrodenbereich 200 und den gemeinsamen Superkondensatorbereich 300 die Struktur der Leiterschichten hervor, die in diesem Ausführungsbeispiel als nicht-vollflächige Kammstruktur mit zentralen Leiterbahnen 111 (Kammrücken) und davon abgehenden Leiterfingern 112 (Zinken) ausgebildet ist. Die als Leiterfinger 112 ausgebildeten, von der zentralen Leiterbahn 111 in einem rechten Winkel abgehenden Leiterfinger 112 verlaufen vorzugsweise parallel und haben eine gleichbleibende Breite. Über die Leiterfinger 112 werden die Elektrodenschichten und die Superkondensatorschichten in der Fläche kontaktiert.

Auf der Vorderseite der Batterie (Teilfigur A) sind die beiden mittleren Zellen 110 durch eine gemeinsame Leiterstruktur miteinander verschaltet. Auf der Rückseite der Batterie (Teilfigur B) sind die beiden linken und die beiden rechten Zellen 110 durch jeweils eine gemeinsame Leiterstruktur miteinander verschaltet. Für eine elektrische Verschaltung der Schichtstapel der beiden mittleren Zellen 110 verläuft die zentrale Leiterbahn 111 als gemeinsame Leiterbahn auf der Vorderseite der Batterie (siehe TeilfigurA). Bei den beiden seitlichen Zellen 110 gehen die zentralen Leiterbahnen 111 auf der Vorderseite der Batterie (siehe Teilfigur A) in die Anschlusskontakte 180 über, die den negativen und positiven Pol der Batterie bilden. In dem Bereich der Anschlusskontakte 180 sind die elektrischen Leiterstrukturen nicht mit Elektrodenmaterial bedeckt.

Weiterhin ist in dem terminalen Bereich der Batterie, auf der sich die Anschlusskontakte 180 befinden, eine quer verlaufende weitere zentrale Leiterbahn auf der Rückseite (Teilfigur B) und bei den beiden mittleren Zellen auf der Vorderseite (TeilfigurA) vorhanden.

Auf der Vorderseite (siehe Teilfigur A) der Batterie 100 ist die Ausrichtung der zentralen Leiterbahn 111 und der Leiterfinger 112 der von links gesehen 1. und 2. Zelle sowie der 3. und 4. Zelle jeweils in einem Winkel von 90° zueinander versetzt. Auf der Rückseite der Batterie (siehe Teilfigur B) sind alle Leiterfinger 112 entsprechend wie die Leiterfinger 112 der beiden mittleren Zellen 110 auf der Vorderseite ausgerichtet. Dabei sind auf der Rückseite (Teilfigur B) die beiden rechten und die beiden linken Zellen 110 jeweils durch eine zentrale Leiterbahn 111 elektrisch miteinander verschaltet. Auf beiden Seiten der gemeinsamen zentralen Leiterbahn 111 ragen die jeweiligen Leiterfinger 112 in einem rechten Winkel ab. Das heißt, dass die einander gegenüberliegenden Leiterstrukturen (also oben und unten bei den jeweiligen Schichtstapeln) der beiden äußeren Zellen 110 in einem rechten Winkel zueinander versetzt sind, wohingegen die einander gegenüberliegenden Leiterstrukturen der beiden mittleren Zellen 110 nicht versetzt sind.

Die Bereiche der Batterie, die von jeweils einer Zelle 110 innerhalb der Batterie abgedeckt werden, betragen in der Breite beispielsweise jeweils etwa 20 mm, die Breite der Batterie ist also insgesamt beispielsweise 80 mm (4 x 20 mm). Die Längserstreckung der einzelnen Zellen 110 kann beispielsweise jeweils 100 bis 110 mm betragen, wobei sich der Superkondensatorbereich im terminalen Bereich dieser Länge über beispielsweise 40 mm erstrecken kann. In einem solchen Ausführungsbeispiel kann die Breite der abragenden Leiterfinger 112 bzw. der Zinken des Kammes 2 mm mit jeweils einem Abstand von 8 mm zwischen den einzelnen Leiterfingern 112 betragen. Die Abdeckung durch diese Leiterstrukturen kann beispielsweise in einem Bereich zwischen 20 % und 30 % der Fläche des darunterliegenden elektrisch isolierenden Substrats liegen.

Die Ausgestaltung der Leiterschichten in diesem Ausführungsbeispiel als Kammstruktur ist nur beispielhaft zu verstehen. In vergleichbarer Weise können andere durchbrochen Leiterstrukturen, wie beispielsweise Zackenstrukturen oder Gitterstrukturen, oder vollflächige Leiterschichten für die erfindungsgemäße Batterie eingesetzt werden.

Im Elektrodenbereich 200 sind die Leiterschichten bzw. sind die Leiterstrukturen 111, 112 der einzelnen Zellen 110 mit negativem Elektrodenmaterial 130 bzw. mit positivem Elektrodenmaterial 120 beschichtet. Im Superkondensatorbereich 300 sich die Leiterschichten bzw. die Leiterstrukturen 111, 112 mit Superkondensatormaterial beschichtet. Da die Superkondensatorbereiche auf den gleichen Leiterschichten wie die Anode und die Kathode liegen, kann ein Ladungsaustausch zwischen dem Elektrodenbereich 200 und dem Superkondensatorbereich 300 stattfinden.

Die Superkondensatorbereiche 300 haben im Vergleich mit den Elektrodenbereichen 200 eine sehr niedrige Impedanz. Daraus ergibt sich, dass bei der Anforderung eines Strompulses sich die Superkondensatorbereiche 300 sehr schnell entladen. **Fig. 3** illustriert den Stromfluss einer erfindungsgemäßen Batterie 100 während einer Pulsbelastung (Teilfigur A) und während der Pause zwischen der Anforderung von Strompulsen (Teilfigur B). Beide Teilfiguren zeigen jeweils eine Ansicht auf die Vorderseite der Batterie 100, die der Ansicht aus Fig. 2, Teilfigur A entspricht. Wenn über die Anschlusskontakte 180 der Batterie 100 ein Strompuls angefordert wird, verläuft der Strom im Wesentlichen oder ausschließlich über die Superkondensatorbereiche 300, wie es mit den Pfeilen in der Teilfigur A angedeutet ist. Nach der Anforderung eines Strompulses bzw. in den Pausen zwischen angeforderten Strompulsen, beispielsweise in einem Sleep-Modus des angeschlossenen Verbrauchers, lädt der Superkondensatorbereich 300 aus dem Elektrodenbereich 200 nach, wie es durch die Pfeile in der Teilfigur B angedeutet ist.

Während der Pulslast fließt der durch die Pfeile angedeutete Strom auf dem kürzesten Weg über den niederohmigen Superkondensatorbereich 300. Dieser erbringt somit die Ladung für den Puls. Dadurch entsteht ein Gefälle im elektrochemischen Potential. Dieses Gefälle wird in der Pause (Teilfigur B) zwischen einzelnen Pulsen durch Ausgleichströme in bzw. aus dem Elektrodenbereich 200 in den Superkondensatorbereich 300 ausgeglichen. Somit werden die angeforderten hohen Ströme aus dem Superkondensatorbereich 300 entnommen. Die Batterie 100 selbst wird nur mit einem geringen gleichmäßigen Strom belastet und kann unter diesen Umständen ihre volle Kapazität abgeben.

Für eine typische Anwendung lässt sich die benötigte Ladung beispielsweise wie folgt abschätzen:
- Die Ladung des Pulses beträgt 29 mAs.
- Bei einem maximalen Spannungseinbruch von 100 mV beträgt die benötigte Kapazität 293 mF.
- Das entspricht einer Superkondensatorfläche von 4,4 cm².
- Eine typische Batterie hat eine Elektrodenfläche (zu belegende Fläche des elektrischen Leiters) von beispielsweise 24,2 cm².
- Die Superkondensatorfläche beträgt 4,51 cm².
- Entsprechend nimmt der Superkondensatorbereich eine Fläche von 19 % der Elektrodenfläche ein.

Diesen Berechnungen liegen die Anforderungen eines LTE-Pulses zugrunde, wobei ein Strom von 220 mA, eine Dauer von 133 ms und eine Ladung von 29,26 mAs gefordert ist. Bei einem Spannungseinbruch von dU max von 100 mV ergibt sich eine benötigte Kapazität von 292,6 mF. Die benötigte Fläche hierfür beträgt 4,51 cm². Bei einer Elektrodenfläche bzw. einer auf den elektrischen Leiterschichten zu belegenden Fläche mit einer Höhe von 110 mm, einer Breite von 22 mm und einer gesamten Fläche von 24,2 cm² ergibt sich hieraus ein benötigter Flächenanteil von 19 % für den Superkondensatorbereich.

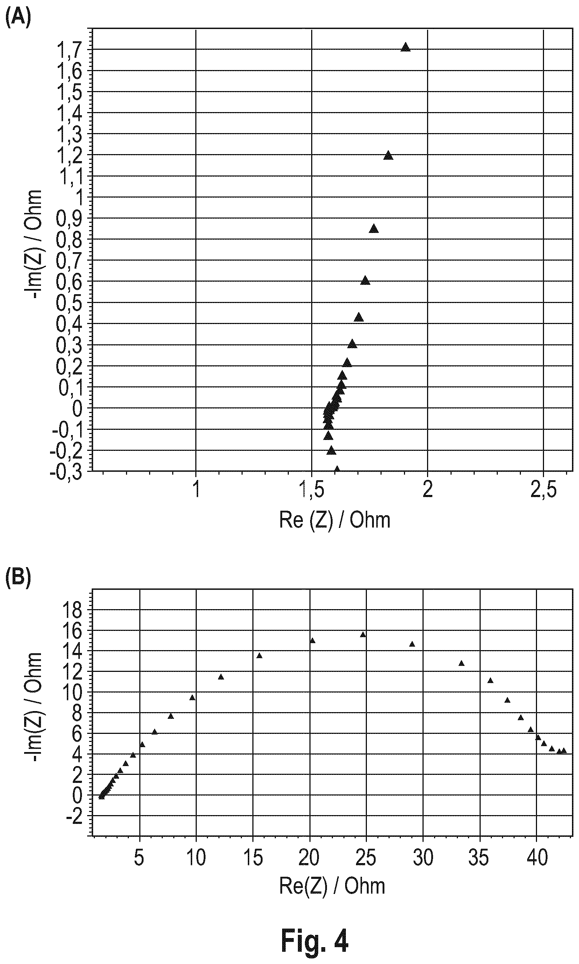

**Fig. 4** illustriert Kapazitätsmessungen in den Superkondensatorbereichen (Teilfigur A) im Vergleich mit den Elektrodenbereichen (Teilfigur B). Die Graphen zeigen die elektrochemischen Impedanzspektren in Nyquist-Darstellung (-Im(Z) gegen Re(Z)). Bei den Superkondensatorbereichen ergibt sich eine steil ansteigende Gerade (TeilfigurA), während die Impedanzspektren der Elektrodenbereiche den hierfür typischen Halbkreis (Teilfigur B) zeigen. Die hohe Strombelastbarkeit der Superkondensatorbereiche zeigt sich in den folgenden Eckwerten:

| | Superkondensatorbereich | Elektrodenbereich |
|---|---|---|
| 100 kHz | 1,7 Ω | 1,7 Ω |
| 0,1 Hz | 2,4 Ω | 43 Ω |

Aus diesen Messergebnissen ergibt sich eine spezifische Kapazität der Superkondensatorbereiche von 64 mF/cm².

Diese Messungen basieren auf gedruckten Superkondensatorflächen mit einer Breite von 38 mm und einer Länge von 38 mm, also insgesamt einer Fläche von 14,44 cm². Für den Aufbau des Schichtstapels mit der Abfolge Superkondensatorfläche-Separator-Superkondensatorfläche wurden ein typischer Separator für gestapelte Zink-Braunstein-Zellen und ein üblicher Elektrolyt (Zinkchlorid, Binder, Wasser) verwendet.

## Patentansprüche

1. Zink-Braunstein-Zelle (110) oder Zink-Silberoxid-Zelle mit einem schichtförmigen Aufbau, umfassend:
a. ein erstes elektrisch isolierendes Substrat und eine erste elektrische Leiterschicht (101, 102, 111, 112), die sich auf einer Fläche des ersten elektrisch isolierenden Substrats erstreckt, und
b. ein zweites elektrisch isolierendes Substrat und eine zweite elektrische Leiterschicht (101, 102, 111, 112), die sich auf einer Fläche des zweiten elektrisch isolierenden Substrats erstrecken, und
c. eine erste Elektrodenschicht (120) aus einem positiven Elektrodenmaterial, das Manganoxid oder Silberoxid umfasst, und
d. eine zweite Elektrodenschicht (130) aus einem negativen Elektrodenmaterial, das metallisches Zink oder eine metallische Zinklegierung umfasst, und
e. eine erste Separatorschicht (160), und
f. eine gestapelte Anordnung der genannten Schichten mit der folgenden Sequenz: Erstes elektrisch isolierendes Substrat - erste elektrische Leiterschicht (101, 102, 111, 112) - erste Elektrodenschicht (120) - erste Separatorschicht (160) - zweite Elektrodenschicht (130) - zweite elektrische Leiterschicht (101, 102, 111, 112) - zweites elektrisch isolierendes Substrat, und
g. einen ersten Elektrolyten, der einen Ionenfluss zwischen den Elektrodenschichten ermöglicht,
wobei
h. sie mindestens einen Elektrodenbereich (200) mit der gestapelten Anordnung der Elektrodenschichten (120, 130) und mindestens einen Superkondensatorbereich (300) umfasst,
i. in dem Superkondensatorbereich (300) ein Abschnitt der ersten elektrischen Leiterschicht (101, 102, 111, 112) mit einer ersten Superkondensatorschicht aus einem Superkondensatormaterial und ein Abschnitt der zweiten elektrischen Leiterschicht (101, 102, 111, 112) mit einer zweiten Superkondensatorschicht aus einem Superkondensatormaterial bedeckt ist, und
j. sie eine zweite Separatorschicht umfasst und
k. in dem Superkondensatorbereich (300) die Superkondensatorschichten in einer gestapelten Anordnung mit der Sequenz Erstes elektrisch isolierendes Substrat - erste elektrische Leiterschicht (101, 102, 111, 112) - erste Superkondensatorschicht - zweite Separatorschicht - zweite Superkondensatorschicht - zweite elektrische Leiterschicht (101, 102, 111, 112) - zweites elektrisch isolierendes Substrat, übereinander liegen und
l. sie einen zweiten Elektrolyten, der einen Ionenfluss zwischen den Superkondensatorschichten ermöglicht, umfasst.

2. Zink-Braunstein- oder Zink-Silberoxid-Zelle nach Anspruch 1 mit mindestens einem der folgenden zusätzlichen Merkmale:
a. Das Superkondensatormaterial umfasst Aktivkohle mit einer spezifischen Oberfläche von 1000 bis 3000 m² pro Gramm Aktivkohle.
b. das Superkondensatormaterial umfasst ein Leitmaterial, insbesondere Graphit und/oder Ruß.

3. Zink-Braunstein- oder Zink-Silberoxid-Zelle nach Anspruch 1 oder Anspruch 2 mit dem folgenden zusätzlichen Merkmal:
a. Der Elektrodenbereich (200) und der Superkondensatorbereich (300) einschließlich der Elektroden-, Separator- und Superkondensatorschichten werden von einem Gehäuse umschlossen.
b. Das Gehäuse ist aus dem ersten Substrat und dem zweiten Substrat gebildet.

4. Zink-Braunstein- oder Zink-Silberoxid-Zelle nach einem der vorhergehenden Ansprüche, insbesondere nach Anspruch 3, mit mindestens einem der folgenden zusätzlichen Merkmale:
a. Die erste und/oder die zweite elektrische Leiterschicht (101, 102, 111, 112) umfasst einen Bereich, der zum Abgreifen elektrischer Energie der Zink-Braunstein- oder der Zink-Silberoxid-Zelle durch einen Verbraucher vorgesehen ist.
b. Der Bereich zum Abgreifen elektrischer Energie der Zink-Braunstein- oder der Zink-Silberoxid-Zelle liegt außerhalb des Gehäuses.

5. Zink-Braunstein- oder Zink-Silberoxid-Zelle nach einem der vorhergehenden Ansprüche mit dem folgenden zusätzlichen Merkmal:
a. Der Superkondensatorbereich (300) erstreckt sich auf einem Flächenanteil von 10 bis 50 % der elektrischen Leiterschichten (101, 102, 111, 112), insbesondere 15 bis 30 %, vorzugsweise 18 bis 21 %.

6. Zink-Braunstein- oder Zink-Silberoxid-Zelle nach einem der vorhergehenden Ansprüche mit einem der folgenden zusätzlichen Merkmale:
a. Mindestens eine der Elektrodenschichten (120, 130) ist eine gedruckte Schicht,
b. mindestens eine der elektrischen Leiterschichten (101, 102, 111, 112) ist eine gedruckte Schicht;
c. mindesten eine der Superkondensatorschichten ist eine gedruckte Schicht.

7. Zink-Braunstein- oder Zink-Silberoxid-Zelle nach einem der vorhergehenden Ansprüche mit einem der folgenden zusätzlichen Merkmale:
a. Die erste elektrische Leiterschicht (101, 102, 111, 112) ist nicht vollflächig ausgebildet und bedeckt vorzugsweise einen Anteil von 10 bis 80 %, vorzugsweise von 10 bis 60 %, derjenigen Fläche des elektrisch isolierenden Substrats, auf der sich die erste elektrische Leiterschicht erstreckt,
b. die zweite elektrische Leiterschicht (101, 102, 111, 112) ist nicht vollflächig ausgebildet und bedeckt vorzugsweise einen Anteil von 10 bis 80 %, vorzugsweise von 10 bis 60 %, derjenigen Fläche des elektrisch isolierenden Substrats, auf der sich die zweite elektrische Leiterschicht erstreckt.

8. Zink-Braunstein- oder Zink-Silberoxid-Zelle nach einem der vorhergehenden Ansprüche mit mindestens einem der folgenden zusätzlichen Merkmale:
a. Die erste elektrische Leiterschicht (101, 102) umfasst eine Leiterstruktur mit einer Mehrzahl von sich kreuzenden Leiterbahnen,
b. die zweite elektrische Leiterschicht (101, 102) umfasst eine Leiterstruktur mit einer Mehrzahl von sich kreuzenden Leiterbahnen,

9. Batterie (100), umfassend mindestens zwei elektrochemische Energiespeicherzellen, von denen mindestens eine als Zink-Braunstein- oder als Zink-Silberoxid-Zelle nach einem der Ansprüche 1 bis 8 ausgebildet ist.

10. Verwendung einer Batterie (100) nach Anspruch 9 zur Bereitstellung von Hochstrompulsen mit einer Stromstärke im Bereich von 100 - 400 mA, insbesondere 200 - 300 mA, für eine Zeitdauer von 50 - 250 ms, insbesondere 100 - 200 ms.

11. Zink-Braunstein- oder Zink-Silberoxid-Zelle nach Anspruch 8, mit dem folgenden zusätzlichen Merkmal:
a. Der Superkondensatorbereich (300) kontaktiert die erste und/oder die zweite elektrische Leiterschicht (101, 102, 111, 112) zwischen dem zum Abgreifen elektrischer Energie vorgesehenen Bereich und dem Elektrodenbereich (200).

12. Zink-Braunstein- oder Zink-Silberoxid-Zelle nach Anspruch 8 mit mindestens einem der folgenden zusätzlichen Merkmale:
a. die sich kreuzenden Leiterbahnen umfassen mehrere Leiterbahnen in paralleler Ausrichtung,
b. die sich kreuzenden Leiterbahnen umschließen viereckige Freibereiche.
c. die sich kreuzenden Leiterbahnen bilden eine Gitterstruktur.

## Claims

1. Zinc-manganese dioxide cell (110) or zinc-silver oxide cell having a layered construction, comprising:
a. a first electrically insulating substrate and a first electrical conductor layer (101, 102, 111, 112) extending on an area of the first electrically insulating substrate, and
b. a second electrically insulating substrate and a second electrical conductor layer (101, 102, 111, 112) extending on an area of the second electrically insulating substrate, and
c. a first electrode layer (120) composed of a positive electrode material comprising manganese oxide or silver oxide, and
d. a second electrode layer (130) composed of a negative electrode material comprising metallic zinc or a metallic zinc alloy, and
e. a first separator layer (160), and
f. a stacked arrangement of the aforementioned layers with the following sequence: first electrically insulating substrate - first electrical conductor layer (101, 102, 111, 112) - first electrode layer (120) - first separator layer (160) - second electrode layer (130) - second electrical conductor layer (101, 102, 111, 112) - second electrically insulating substrate, and
g. a first electrolyte enabling an ion flow between the electrode layers,
wherein
h. it comprises at least one electrode region (200) with the stacked arrangement of the electrode layers (120, 130) and at least one supercapacitor region (300),
i. in the supercapacitor region (300) a section of the first electrical conductor layer (101, 102, 111, 112) is covered with a first supercapacitor layer composed of a supercapacitor material and a section of the second electrical conductor layer (101, 102, 111, 112) is covered with a second supercapacitor layer composed of a supercapacitor material, and
j. it comprises a second separator layer, and
k. in the supercapacitor region (300) the supercapacitor layers lie one above another in a stacked arrangement with the sequence: first electrically insulating substrate - first electrical conductor layer (101, 102, 111, 112) - first supercapacitor layer - second separator layer - second supercapacitor layer - second electrical conductor layer (101, 102, 111, 112) - second electrically insulating substrate, and
l. it comprises a second electrolyte enabling an ion flow between the supercapacitor layers.

2. Zinc-manganese dioxide or zinc-silver oxide cell according to Claim 1 having at least one of the following additional features:
a. The supercapacitor material comprises activated carbon having a specific surface area of 1000 to 3000 m² per gram of activated carbon,
b. the supercapacitor material comprises a conductive material, in particular graphite and/or carbon black.

3. Zinc-manganese dioxide or zinc-silver oxide cell according to Claim 1 or Claim 2 having the following additional feature:
a. The electrode region (200) and the supercapacitor region (300) including the electrode, separator and supercapacitor layers are enclosed by a housing.
b. The housing is formed from the first substrate and the second substrate.

4. Zinc-manganese dioxide or zinc-silver oxide cell according to any of the preceding claims, in particular according to Claim 3, having at least one of the following additional features:
a. The first and/or the second electrical conductor layer (101, 102, 111, 112) comprise(s) a region provided for tapping off electrical energy of the zinc-manganese dioxide or zinc-silver oxide cell by means of a consumer.
b. The region for tapping off electrical energy of the zinc-manganese dioxide or zinc-silver oxide cell lies outside the housing.

5. Zinc-manganese dioxide or zinc-silver oxide cell according to any of the preceding claims having the following additional feature:
a. The supercapacitor region (300) extends on an area proportion of 10 to 50% of the electrical conductor layers (101, 102, 111, 112), in particular 15 to 30%, preferably 18 to 21%.

6. Zinc-manganese dioxide or zinc-silver oxide cell according to any of the preceding claims having one of the following additional features:
a. At least one of the electrode layers (120, 130) is a printed layer,
b. at least one of the electrical conductor layers (101, 102, 111, 112) is a printed layer;
c. at least one of the supercapacitor layers is a printed layer.

7. Zinc-manganese dioxide or zinc-silver oxide cell according to any of the preceding claims having one of the following additional features:
a. The first electrical conductor layer (101, 102, 111, 112) is not formed over the whole area and preferably covers a proportion of 10 to 80%, preferably of 10 to 60%, of that area of the electrically insulating substrate on which the first electrical conductor layer extends,
b. the second electrical conductor layer (101, 102, 111, 112) is not formed over the whole area and preferably covers a proportion of 10 to 80%, preferably of 10 to 60%, of that area of the electrically insulating substrate on which the second electrical conductor layer extends.

8. Zinc-manganese dioxide or zinc-silver oxide cell according to any of the preceding claims having at least one of the following additional features:
a. The first electrical conductor layer (101, 102) comprises a conductor structure having a plurality of conductor tracks crossing one another,
b. the second electrical conductor layer (101, 102) comprises a conductor structure having a plurality of conductor tracks crossing one another.

9. Battery (100), comprising at least two electrochemical energy storage cells, at least one of which is configured as a zinc-manganese dioxide or zinc-silver oxide cell according to any of Claims 1 to 8.

10. Use of a battery (100) according to Claim 9 for providing high-current pulses having a current intensity in the range of 100-400 mA, in particular 200-300 mA, for a time duration of 50-250 ms, in particular 100-200 ms.

11. Zinc-manganese dioxide or zinc-silver oxide cell according to Claim 8 having the following additional feature:
a. The supercapacitor region (300) contacts the first and/or the second electrical conductor layer (101, 102, 111, 112) between the region provided for tapping off electrical energy and the electrode region (200).

12. Zinc-manganese dioxide or zinc-silver oxide cell according to Claim 8 having at least one of the following additional features:
a. the conductor tracks crossing one another comprise a plurality of conductor tracks in a parallel alignment,
b. the conductor tracks crossing one another enclose quadrilateral free regions,
c. the conductor tracks crossing one another form a grid structure.

## Revendications

1. Élément zinc-dioxyde de manganèse (110) ou élément zinc-oxyde d'argent doté d'une structure en couches, comprenant :
a. un premier substrat électriquement isolant et une première couche électriquement conductrice (101, 102, 111, 112) qui s'étend sur une surface du premier substrat électriquement isolant, et
b. un deuxième substrat électriquement isolant et une deuxième couche électriquement conductrice (101, 102, 111, 112) qui s'étendent sur une surface du deuxième substrat électriquement isolant, et
c. une première couche d'électrode (120) constituée d'un matériau d'électrode positif comprenant de l'oxyde de manganèse ou de l'oxyde d'argent, et
d. une deuxième couche d'électrode (130) constituée d'un matériau d'électrode négatif comprenant du zinc métallique ou un alliage de zinc métallique, et
e. une première couche de séparateur (160), et
f. une disposition empilée des couches mentionnées, selon la séquence suivante : premier substrat électriquement isolant - première couche électriquement conductrice (101, 102, 111, 112) - première couche d'électrode (120) - première couche de séparateur (160) - deuxième couche d'électrode (130) - deuxième couche électriquement conductrice (101, 102, 111, 112) - deuxième substrat électriquement isolant, et
g. un premier électrolyte permettant un flux d'ions entre les couches d'électrode,
dans lequel
h. il comprend au moins une zone d'électrode (200) comportant la disposition empilée des couches d'électrode (120, 130) et au moins une zone de supercondensateur (300),
i. dans la zone de supercondensateur (300), une section de la première couche électriquement conductrice (101, 102, 111, 112) est recouverte d'une première couche de supercondensateur constituée d'un matériau de supercondensateur et une section de la deuxième couche électriquement conductrice (101, 102, 111, 112) est recouverte d'une deuxième couche de supercondensateur constituée d'un matériau de supercondensateur, et
j. il comprend une deuxième couche de séparateur et
k. dans la zone de supercondensateur (300), les couches de supercondensateur sont superposées dans une disposition empilée selon la séquence : premier substrat électriquement isolant - première couche électriquement conductrice (101, 102, 111, 112) - première couche de supercondensateur - deuxième couche de séparateur - deuxième couche de supercondensateur - deuxième couche électriquement conductrice (101, 102, 111, 112) - deuxième substrat électriquement isolant, et
l. il comprend un deuxième électrolyte qui permet un flux d'ions entre les couches de supercondensateur.

2. Élément zinc-dioxyde de manganèse ou élément zinc-oxyde d'argent selon la revendication 1, présentant au moins l'une des caractéristiques supplémentaires suivantes :
a. le matériau de supercondensateur comprend du charbon actif présentant une surface spécifique de 1000 à 3000 m² par gramme de charbon actif,
b. le matériau de supercondensateur comprend un matériau conducteur, en particulier du graphite et/ou du noir de carbone,

3. Élément zinc-dioxyde de manganèse ou élément zinc-oxyde d'argent selon la revendication 1 ou la revendication 2, présentant la caractéristique supplémentaire suivante :
a. la zone d'électrode (200) et la zone de supercondensateur (300), y compris les couches d'électrode, de séparateur et de supercondensateur, sont entourées d'un boîtier,
b. le boîtier est formé à partir du premier substrat et du deuxième substrat.

4. Élément zinc-dioxyde de manganèse ou élément zinc-oxyde d'argent selon l'une des revendications précédentes, en particulier selon la revendication 3, présentant au moins l'une des caractéristiques supplémentaires suivantes :
a. la première et/ou la deuxième couche électriquement conductrice (101, 102, 111, 112) comprend une zone destinée au prélèvement d'énergie électrique de l'élément zinc-dioxyde de manganèse ou de l'élément zinc-oxyde d'argent par un consommateur,
b. la zone destinée au prélèvement d'énergie électrique de l'élément zinc-dioxyde de manganèse ou de l'élément zinc-oxyde d'argent se situe à l'extérieur du boîtier.

5. Élément zinc-dioxyde de manganèse ou élément zinc-oxyde d'argent selon l'une des revendications précédentes, présentant la caractéristique supplémentaire suivante :
a. la zone de supercondensateur (300) s'étend sur une part de surface de 10 à 50 % des couches électriquement conductrices (101, 102, 111, 112), en particulier de 15 à 30 %, de préférence de 18 à 21 %.

6. Élément zinc-dioxyde de manganèse ou élément zinc-oxyde d'argent selon l'une des revendications précédentes, présentant l'une des caractéristiques supplémentaires suivantes :
a. au moins l'une des couches d'électrode (120, 130) est une couche imprimée,
b. au moins l'une des couches électriquement conductrices (101, 102, 111, 112) est une couche imprimée ;
c. au moins l'une des couches de supercondensateur est une couche imprimée.

7. Élément zinc-dioxyde de manganèse ou élément zinc-oxyde d'argent selon l'une des revendications précédentes, présentant l'une des caractéristiques supplémentaires suivantes :
a. la première couche électriquement conductrice (101, 102, 111, 112) n'est pas formée sur toute la surface et recouvre de préférence une part de 10 à 80 %, de préférence de 10 à 60 %, de la surface du substrat électriquement isolant sur laquelle s'étend la première couche électriquement conductrice,
b. la deuxième couche électriquement conductrice (101, 102, 111, 112) n'est pas formée sur toute la surface et recouvre de préférence une part de 10 à 80 %, de préférence de 10 à 60 %, de la surface du substrat électriquement isolant sur laquelle s'étend la deuxième couche électriquement conductrice.

8. Élément zinc-dioxyde de manganèse ou élément zinc-oxyde d'argent selon l'une des revendications précédentes, présentant au moins l'une des caractéristiques supplémentaires suivantes :
a. la première couche électriquement conductrice (101, 102) comprend une structure conductrice présentant une pluralité de pistes conductrices qui se croisent,
b. la deuxième couche électriquement conductrice (101, 102) comprend une structure conductrice présentant une pluralité de pistes conductrices qui se croisent.

9. Batterie (100) comprenant au moins deux éléments de stockage d'énergie électrochimique, dont au moins l'un est réalisé sous la forme d'un élément zinc-dioxyde de manganèse ou d'un élément zinc-oxyde d'argent selon l'une des revendications 1 à 8.

10. Utilisation d'une batterie (100) selon la revendication 9 pour fournir des impulsions de courant fort ayant une intensité de courant dans la plage de 100 à 400 mA, en particulier de 200 à 300 mA, pendant une durée de 50 à 250 ms, en particulier de 100 à 200 ms.

11. Élément zinc-dioxyde de manganèse ou élément zinc-oxyde d'argent selon la revendication 8, présentant la caractéristique supplémentaire suivante :
a. la zone de supercondensateur (300) est en contact avec la première et/ou la deuxième couche électriquement conductrice (101, 102, 111, 112) entre la zone destinée au prélèvement d'énergie électrique et la zone d'électrode (200).

12. Élément zinc-dioxyde de manganèse ou élément zinc-oxyde d'argent selon la revendication 8, présentant au moins l'une des caractéristiques supplémentaires suivantes :
a. les pistes conductrices qui se croisent comprennent plusieurs pistes conductrices orientées parallèlement,
b. les pistes conductrices qui se croisent entourent des zones libres quadrangulaires,
c. les pistes conductrices qui se croisent forment une structure de grille.
